# EUROPEAN PATENT SPECIFICATION

(11) **EP 3 203 367 B1**
(45) Date of publication and mention of the grant of the patent: **20.03.2019**
(21) Application number: 16206473.7
(22) Date of filing: 22.12.2016
(51) Int. Cl.: G06F 3/12, H04L 29/08, H04N 1/00

(54) **CLOUD SERVER, USER TERMINAL APPARATUS, IMAGE FORMING APPARATUS, METHOD FOR MANAGING DOCUMENT AND METHOD FOR CONTROLLING PRINT**
CLOUD-SERVER, BENUTZERENDGERÄTEVORRICHTUNG, BILDERZEUGUNGSVORRICHTUNG, VERFAHREN ZUR DOKUMENTENVERWALTUNG UND VERFAHREN ZUR DRUCKSTEUERUNG
SERVEUR EN NUAGE, APPAREIL DE TERMINAL D'UTILISATEUR, APPAREIL DE FORMATION D'IMAGE, PROCÉDÉ DE GESTION DE DOCUMENT ET PROCÉDÉ DE COMMANDE D'IMPRESSION

(30) Priority: 14.01.2016 KR 20160004561
(43) Date of publication of application: 09.08.2017
(73) Proprietor: HP Printing Korea Co., Ltd., Gyeonggi-do 16677 (KR)
(72) Inventor: KIM, Se-young, Gyeonggi-do (KR); JUNG, Jue-hyun, Seoul (KR); CHO, Soo-young, Gyeonggi-do (KR); YUN, Eun-kyung, Seoul (KR); LEE, Sang-joon, Gyeonggi-do (KR)
(74) Representative: Appleyard Lees IP LLP

(56) References cited:
- US-A1- 2006 114 488
- US-A1- 2007 124 436
- Ian Paul: "Top 15 Cloud Storage Tips and Tasks", , 6 May 2012 (2012-05-06), XP002770863, Retrieved from the Internet: URL:http://www.pcworld.com/article/255072/ top_15_cloud_storage_tips_and_tasks.html [retrieved on 2017-05-19]

## Description

### TECHNICAL FIELD

1 The present disclosure relates to a cloud server, a user terminal apparatus, an image forming apparatus, a method for managing a document, and a method for controlling a print. More particularly, the present disclosure relates to a cloud server, a user terminal apparatus, an image forming apparatus, a method for managing a document, and a method for controlling a print that may align various files of a user based on a behavior and provide the aligned files.

### BACKGROUND

2 In general, an image forming apparatus denotes an apparatus for printing data generated from a terminal, such as a computer, on a recording medium, such as paper. An example of an image forming apparatus may include a copy machine, a printer, a facsimile, a multi function peripheral (MFP) complexly implementing the above-mentioned functions with a single apparatus, or the like.

3 As a cloud environment is recently introduced, the user may store files in various storages, and may perform a printing task for the files stored in various storages in the image forming apparatus.

4 In order to retrieve a file intended to be used by the user, the user needs to know a title or a stored position of the file. However, in the case in which the user does not know the title or the stored position of the file, according to the related art, it is not easy for the user to retrieve the file. Specifically, in the case in which the user does not know the title or the stored position of the file, there is inconvenience in that the user must check the files stored in various storages one by one.

5 However, a person often remembers a specific matter based on a behavior. For example, even if the user does not remember the title of the file or the position of the file that the user wants to find, the user often remembers that the user has previously performed a printing task, for example a few days ago.

6 However, according to the related art, a method capable of retrieving the file based on the above-mentioned behavior is not provided.

7 The following citations represent the closest prior art: Ian Paul: "Top 15 Cloud Storage Tips and Tasks", 6 May 22012 (2012-05-06). Retrieved from the Internet: URL:http://www.pcworld.com/article/255072/

US 2007/124436 discloses a print server, mobile computing device, system and method for printing using a mobile computing device.

US 2006/114488 discloses a method and system for merging scan files into a colour workflow.

### SUMMARY

8 Aspects of the present disclosure are to address at least the above-mentioned problems and/or disadvantages and to provide at least the advantages described below. Accordingly, an aspect of the present disclosure is to provide a cloud server, a user terminal apparatus, an image forming apparatus, a method for managing a document, and a method for controlling a print that may align various files of a user based on a behavior and provide the aligned files.

9 The invention is set out in the appended claims.

11 Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

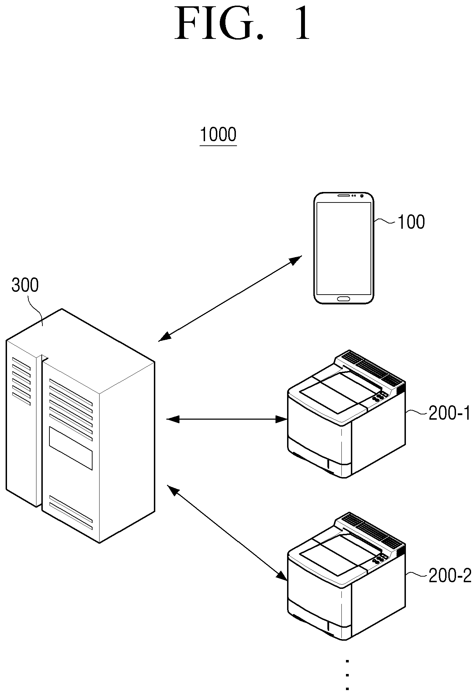

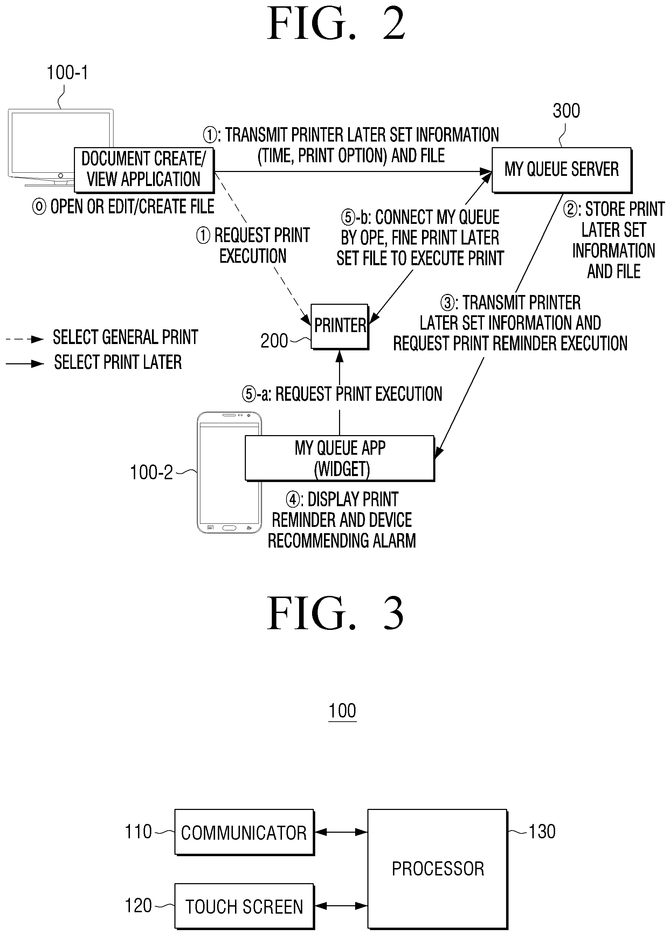

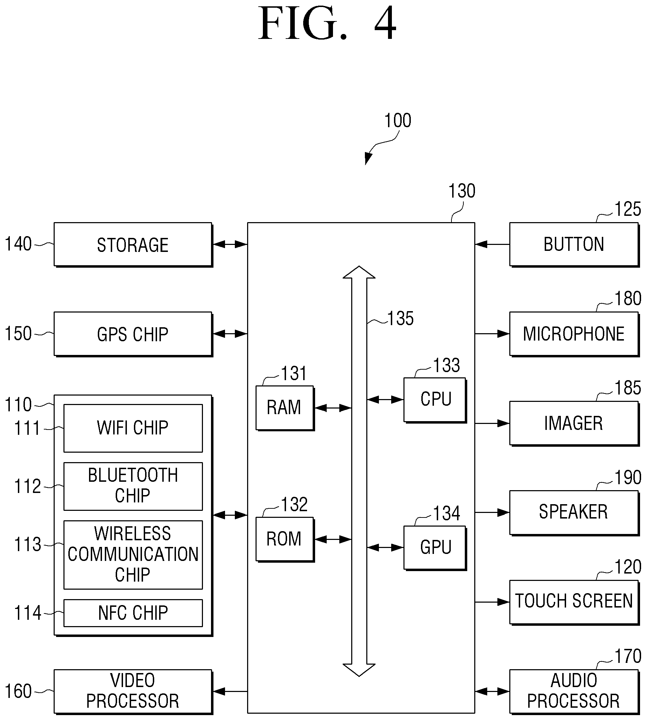

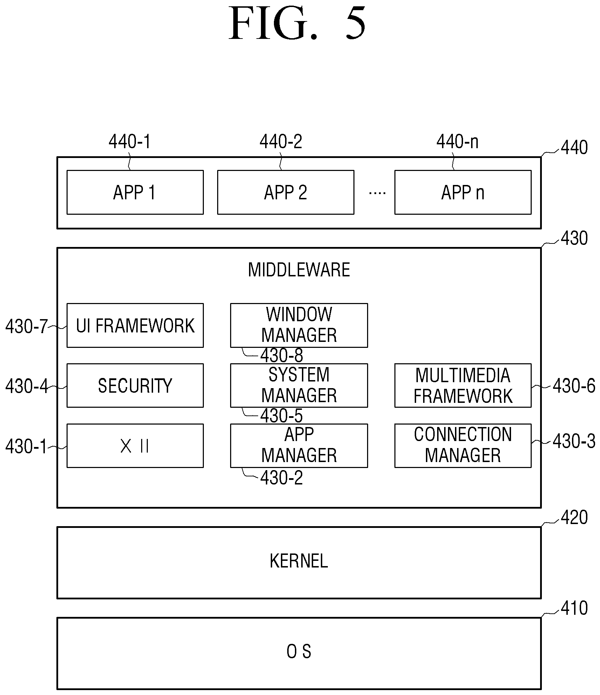

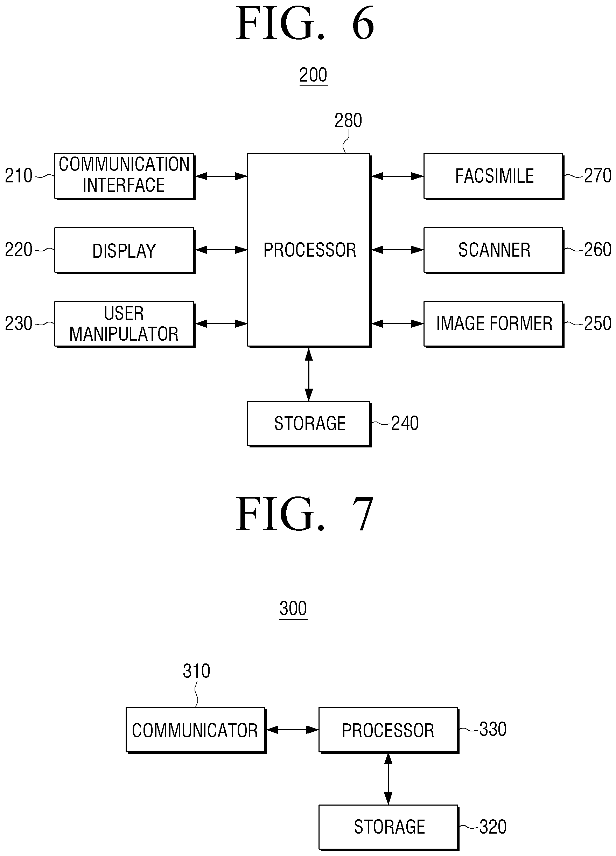

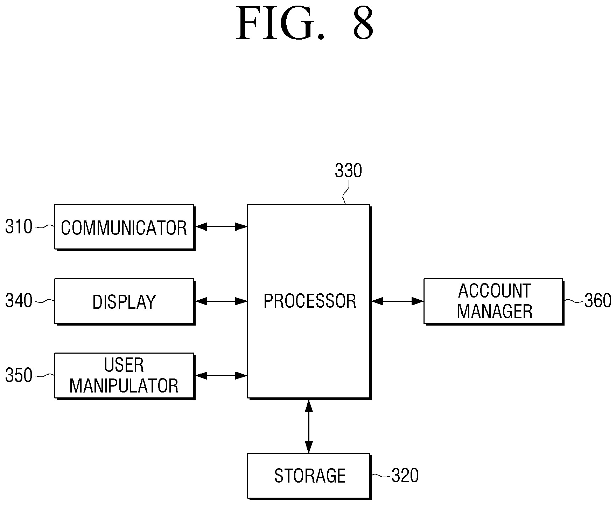

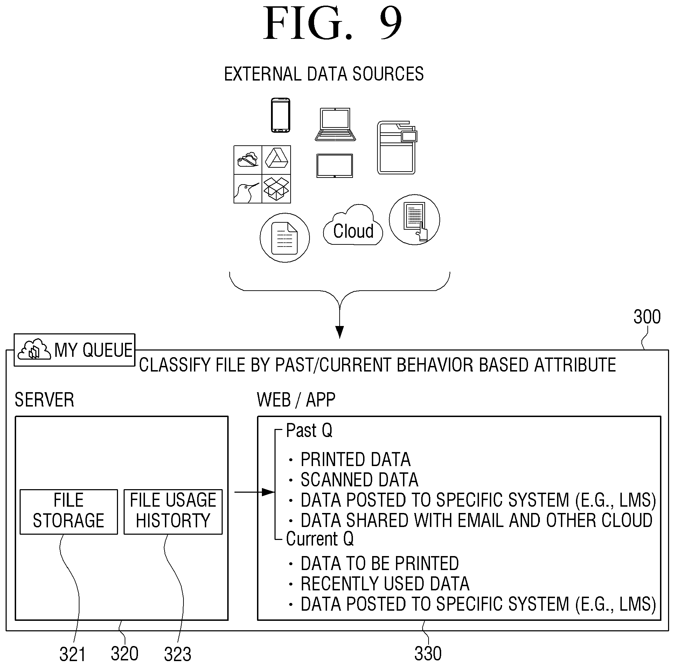

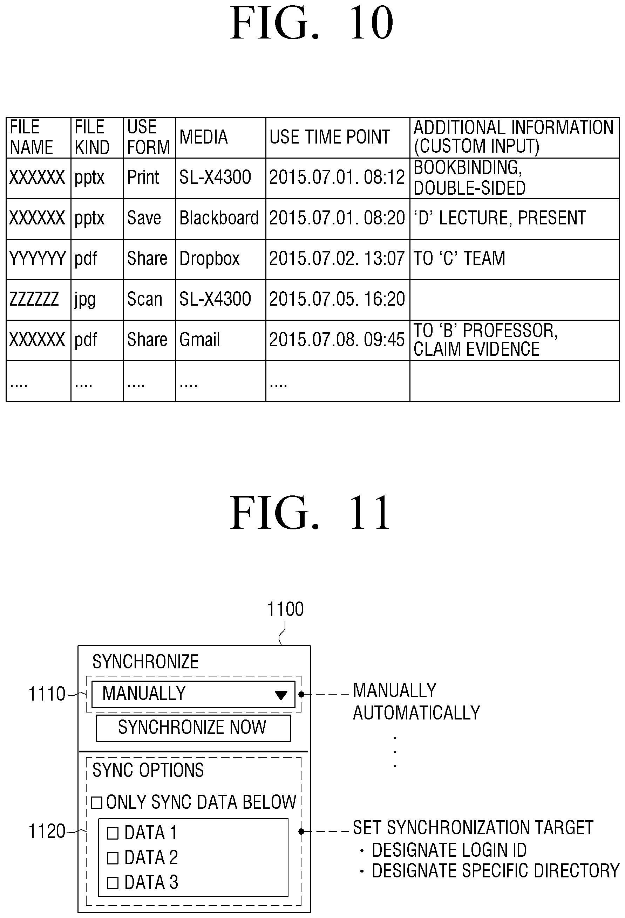

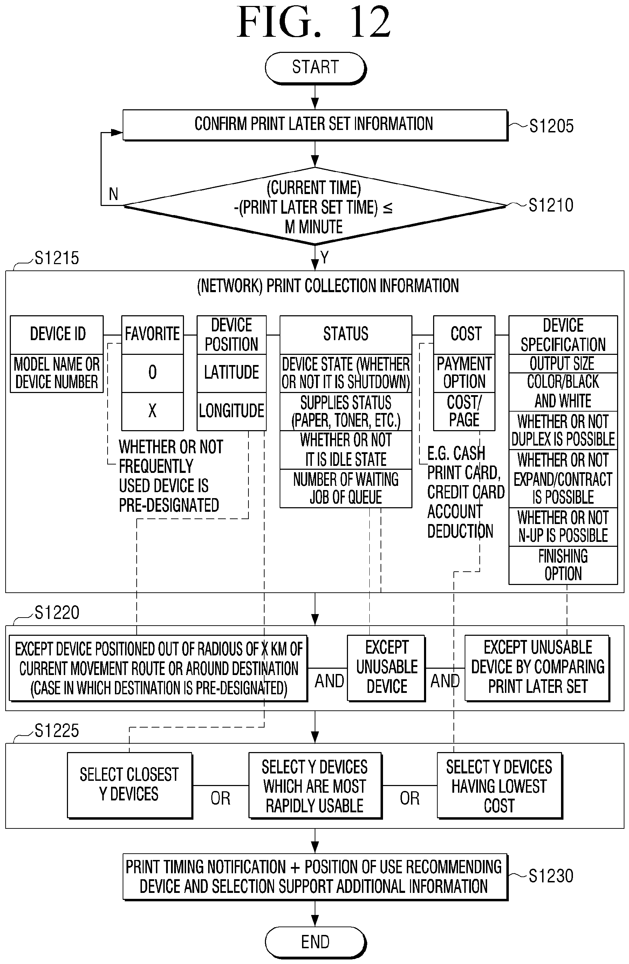

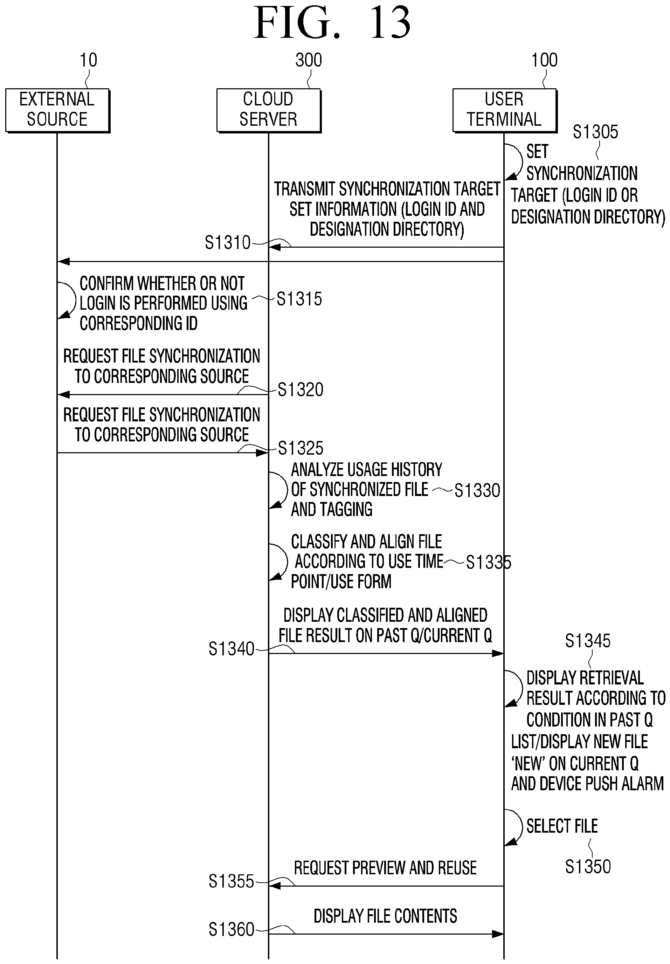

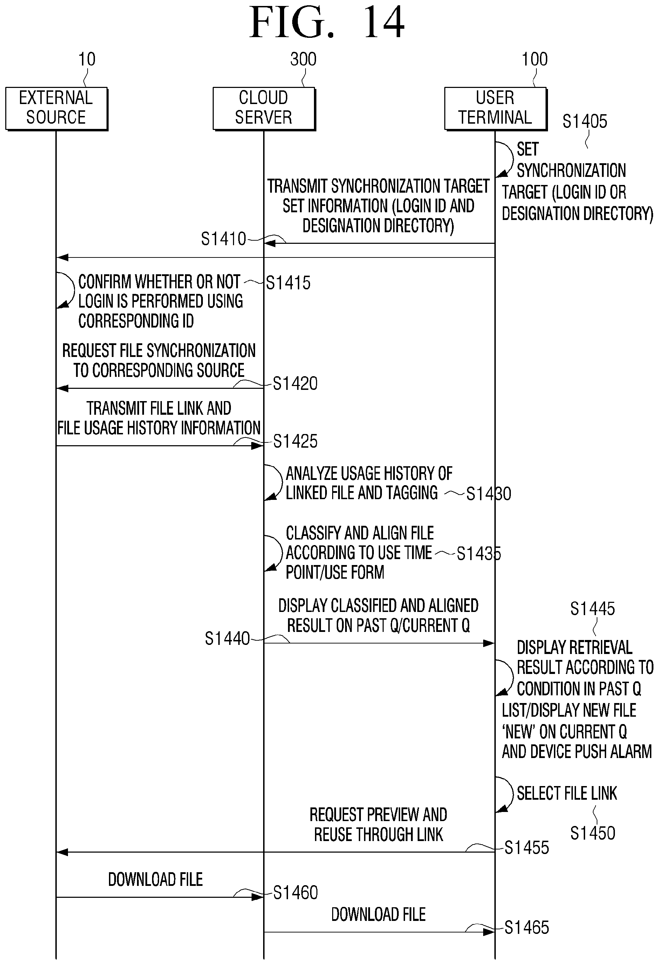

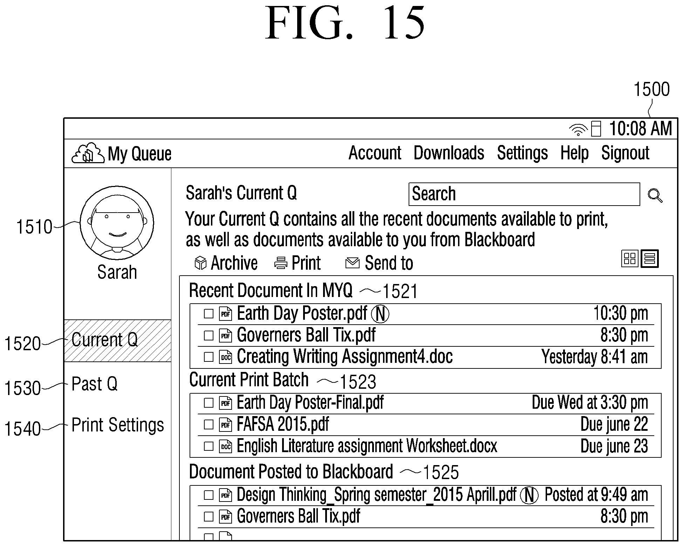

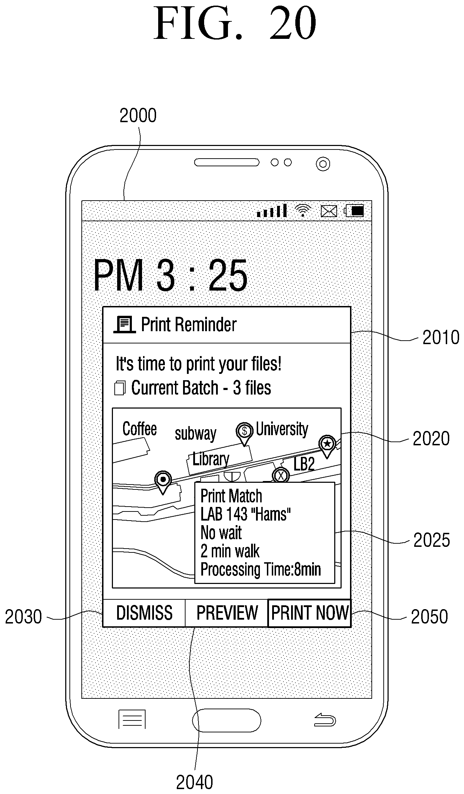

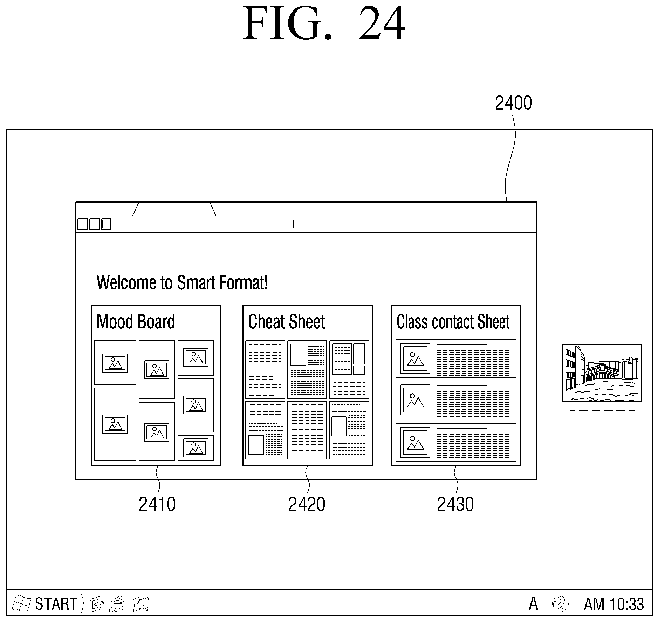

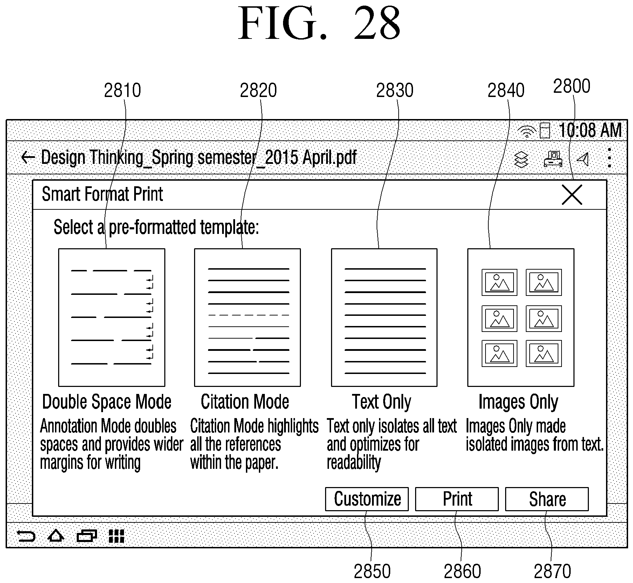

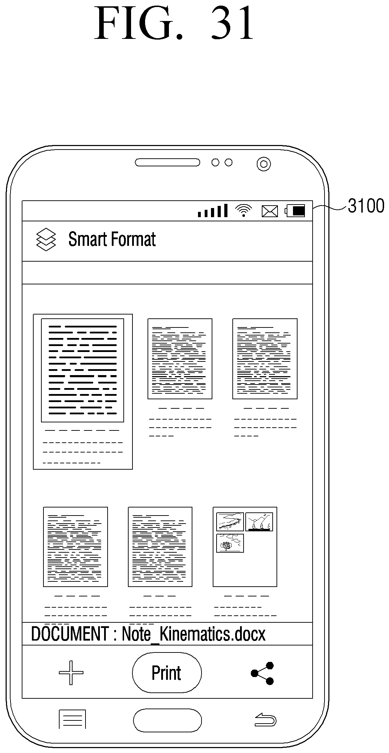

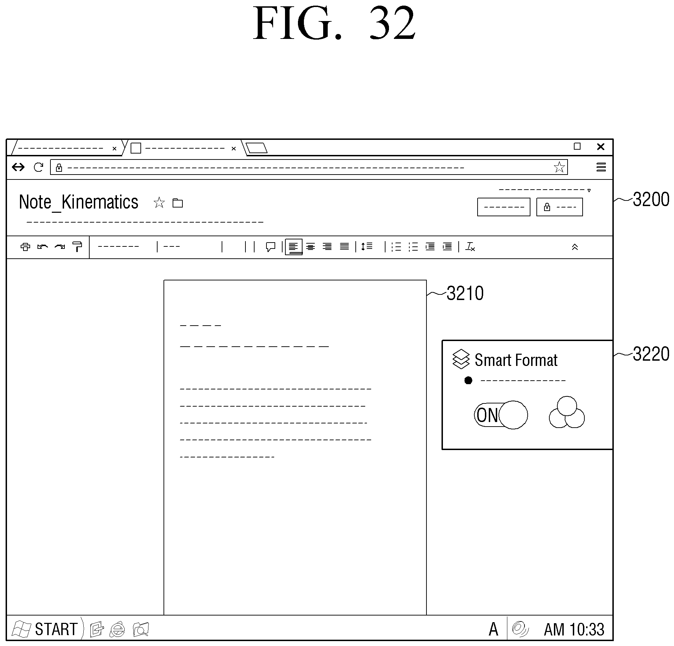

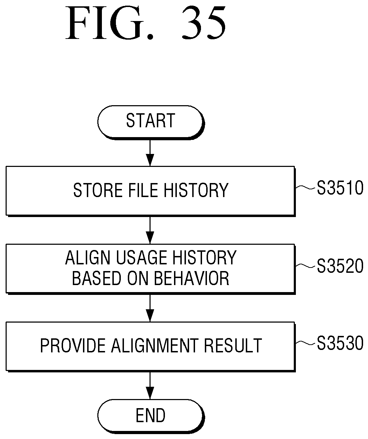

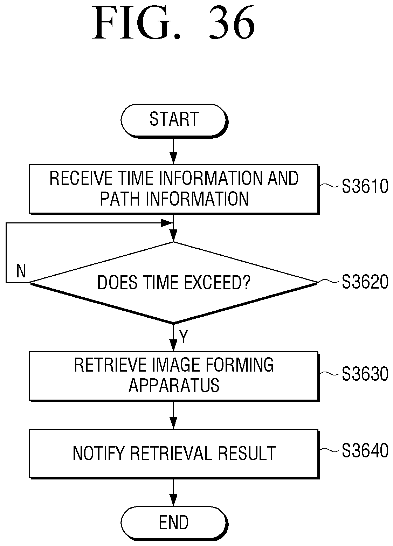

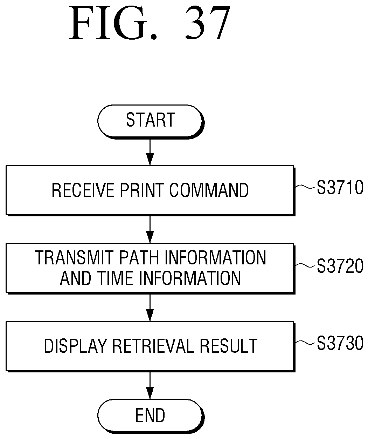

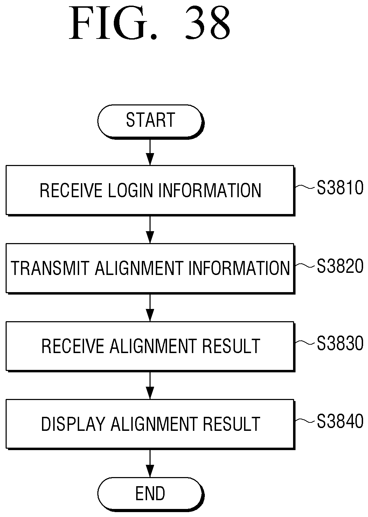

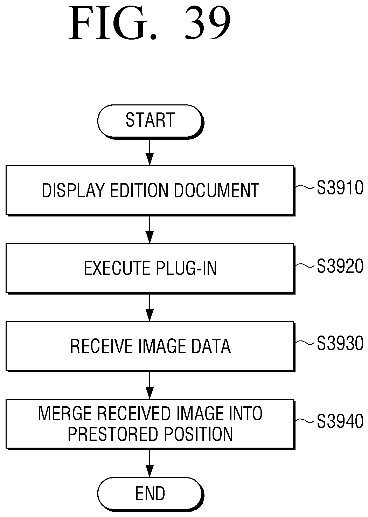

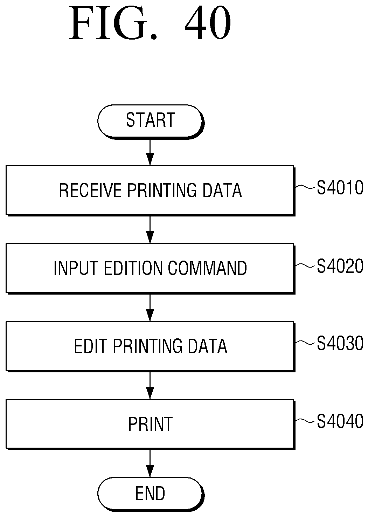

12 The above and other aspects, features, and advantages of certain embodiments of the present disclosure will be more apparent from the following description taken in conjunction with the accompanying drawings, in which:
13 FIG. 1 is a block diagram of an image forming system according to an embodiment of the present disclosure;
14 FIG. 2 is a diagram of a method for controlling a print according to an embodiment of the present disclosure;
15 FIG. 3 is a block diagram of a user terminal apparatus according to an embodiment of the present disclosure;
16 FIG. 4 is a block diagram of a user terminal apparatus according to an embodiment of the present disclosure;
17 FIG. 5 is a diagram of a software configuration of a user terminal apparatus according to an embodiment of the present disclosure;
18 FIG. 6 is a block diagram of an image forming apparatus according to an embodiment of the present disclosure;
**37** FIG. 7 is a block diagram of a cloud server according to an embodiment of the present disclosure;
38 FIG. 8 is a block diagram of a cloud server according to an embodiment of the present disclosure;
**39** FIG. 9 is a diagram of a data storing structure and an operation of generating a file list based on a behavior according to an embodiment of the present disclosure;
40 FIG. 10 is a diagram of a usage history according to an embodiment of the present disclosure;
**41** FIG. 11 is a diagram of a user interface window to which a retrieval range of the file based on a behavior is set according to an embodiment of the present disclosure;
**42** FIG. 12 is a flowchart of an operation of a case in which a reservation printing command is input to the cloud server according to an embodiment of the present disclosure;
**43** FIG. 13 is a sequence diagram of an operation of displaying a file list based on a behavior according to an embodiment of the present disclosure;
**44** FIG. 14 is a sequence diagram of an operation of displaying a file list based on a behavior according to an embodiment of the present disclosure;
45 FIGS. 15, 16, 17, 18, and 19 are diagrams of a user interface window which is displayable on a user terminal apparatus according to an embodiment of the present disclosure;
46 FIGS. 20, 21, 22, and 23 are diagrams of a user interface window displaying various examples of notification information according to an embodiment of the present disclosure;
**47** FIGS. 24, 25, 26, and 27 are diagrams of a user interface window which is displayable on a user terminal apparatus in a process of merging files according to an embodiment of the present disclosure;
**48** FIGS. 28, 29, and 30 are diagrams of a user interface window which is displayable on an image forming apparatus in a process of changing a layout of printing data according to an embodiment of the present disclosure;
**49** FIG. 31 is a diagram of a user interface window which is displayable on a user terminal apparatus in a process of changing a layout of printing data according to an embodiment of the present disclosure;
**50** FIGS. 32, 33, and 34 are diagrams of a user interface window which is displayable on a user terminal apparatus in a process of synchronizing files according to an embodiment of the present disclosure;
**51** FIG. 35 is a flowchart of a method for managing a document in a cloud server according to an embodiment of the present disclosure;
52 FIG. 36 is a flowchart illustrating a reservation printing method in a cloud server according to an embodiment of the present disclosure;
**53** FIG. 37 is a flowchart of a reservation printing method in a user terminal apparatus according to an embodiment of the present disclosure;
54 FIG. 38 is a flowchart of a method for managing a document in a user terminal apparatus according to an embodiment of the present disclosure;
55 FIG. 39 is a flowchart of a method for merging documents in a user terminal apparatus according to an embodiment of the present disclosure; and
56 FIG. 40 is a flowchart of a method for forming an image in an image forming apparatus according to an embodiment of the present disclosure.
57 Throughout the drawings, it should be noted that like reference numbers are used to depict the same or similar elements, features, and structures.

### DETAILED DESCRIPTION

58 The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known descriptions of well-known functions and constructions may be omitted for clarity and conciseness.

59 The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

60 It is to be understood that the singular forms "a," "an," and "the" include plural referents unless the context clearly dictates otherwise. Thus, for example, reference to "a component surface" includes reference to one or more of such surfaces.

61 Terms such as first, second, etc. can be used to describe various components, but the components should not be limited to the terms. The terms are only used to distinguish one component from the others.

62 In the present application, the terms "include" or "consist of" intend to designate the presence of features, numbers, steps, operations, components, elements, or a combination thereof that are written in the specification, but do not exclude the presence or possibility of addition of one or more other features, numbers, steps, operations, components, elements, or a combination thereof.

63 In embodiments of the present disclosure, a "module" or a "unit" performs at least one function or operation, and may be implemented in hardware, software, or a combination of hardware and software. In addition, a plurality of 'modules' or a plurality of 'units' may be integrated into at least one module and may be implemented in at least one processor (not illustrated), except for a 'module' or a 'unit' in which they need to be implemented in specific hardware.

64 Hereinafter, the present disclosure will be described in more detail with reference to the accompanying drawings.

65 FIG. 1 is a block diagram of an image forming system according to an embodiment of the present disclosure.

66 Referring to FIG. 1, an image forming system 1000 may include a user terminal apparatus 100, a plurality of image forming apparatuses 200-1 and 200-2, and a cloud server 300.

67 The user terminal apparatus 100 may edit or generate a file. Here, the user terminal apparatus 100 may receive contents from another user terminal apparatus (not shown), and may generate the file to which the received contents are reflected. For example, if the user terminal apparatus 100 receives a synchronization command and the contents from another user terminal apparatus (not shown) during a process of editing or generating (or editing) a file, the user terminal apparatus 100 may merge the received contents into a specific position (e.g., a cursor position, an edition position, or the like) of a document file which is currently being edited. At the time of implementation, the user terminal apparatus 100 may receive the synchronization command from a user, and also request transmission of the contents to another predetermined user terminal apparatus (not shown) to receive the requested contents.

68 Here, in the case in which the received contents are image files including mathematical expressions, the user terminal apparatus 100 may extract mathematical expression data from an image using an optical character recognition (OCR) operation, and may insert the extracted mathematical expression data into a preset position within a document file which is currently being displayed. Alternatively, in the case in which the received contents are image files including a text, the user terminal apparatus 100 may extract the text from an image using an OCR operation for the image files, and may insert the extracted text into a preset position within a document file which is currently being displayed. The embodiment as described above will be described below with reference to FIGS. 32, 33, and 34.

69 In addition, the user terminal apparatus 100 may transmit the file to the cloud server 300 or other storages (e.g., a private file server, a specific group file server (e.g., a learning management system (LMS)), and the image forming apparatus). Here, the private file server is a file storing server to which only the user of the user terminal apparatus 100 may have access, and the specific group file server, which is a file storing server in which the file may be shared between group members to which the user belongs, may be the LMS, or the like. Here, the LMS is a server managing a class progress, a material, a grade, an attendance, and the like, on-line, and may be registered with files such as learning materials and results through a notice board for each lecture.

70 In addition, the user terminal apparatus 100 may provide user information to the cloud server 300, and may receive a file list including usage history information (or utilization history information) for a plurality of files from the cloud server 300. Here, the user information, which is information capable of identifying the user, may include identification (ID) of the user, a name of the user, a phone number of the user, and the like. Here, the file list, which is a list for files which may be managed or accessed by the user, includes user history information for a specific file.

71 In addition, the user terminal apparatus 100 displays file information included in the received file list. For example, the user terminal apparatus 100 may display a name, a final modified time, a file size, a storage position, history information, and the like for each of the files included in the file list.

72 In this case, the user terminal apparatus 100 may display the files included in the file list based on the usage history of the user. For example, the user terminal apparatus 100 may align and display the files in a time sequence based on the usage history for each of the plurality of files based on the received file list, and may display a plurality of histories for the file with a sub-item for at least one file.

73 In addition, the user terminal apparatus 100 may receive retrieval information (e.g., a title, a storing place, a keyword, etc.) from the user to display the file information corresponding to the retrieval information in the received file list.

74 Since the user terminal apparatus 100 may simultaneously display the usage history information, the user may retrieve the file based on the usage history that he or she has performed for the specific file even if the user does not remember a file name or a storage that he or she wants to find. For example, if the user does not remember a specific file name, but remembers that he or she has printed the file yesterday or remembers a history that he or she has shared the file with another user two days ago, the user may retrieve the corresponding file based on a printing history displayed on the displayed file list, or may retrieve the corresponding file based on the sharing history.

75 In addition, the user terminal apparatus 100 may perform various functions for the files stored in the user terminal apparatus 100 or the files stored in various storages. Here, the functions may be a printing of the file, an uploading to another file server, a transmission to another user, and the like.

76 For example, in the case in which the user inputs a printing command for the file, the user terminal apparatus 100 generates printing data corresponding to the file and directly transmits the printing data to the image forming apparatus 200-1, or transmits the file itself to the cloud server 300, thereby making it possible to perform the printing task. In this case, the cloud server 300 may convert the file into the printing data which is recognizable by the image forming apparatus 200-1 selected by the user, and may transmit the converted printing data to the image forming apparatus 200-1 selected by the user.

77 In addition, the printing command described above may be a reservation printing command performing the printing at a specific time. In this case, the user terminal apparatus 100 may select the file to be a print target, and may receive time information at which the corresponding file is to be printed. In addition, the user terminal apparatus 100 may transmit information of the selected file and reservation time information to the cloud server 300. Accordingly, the cloud server 300 may notify a printing notification to the user terminal apparatus 100 at a reserved time.

78 Such reservation printing may be a reservation printing for a designated image forming apparatus that the image forming apparatus in which the printing may be performed at a time point at which the reservation printing command is input is preset, and may be a reservation printing in which the image forming apparatus is not preset. If the image forming apparatus is not preset, the cloud server 300 may retrieve the image forming apparatus which may be printed by the user at the reservation printing time point, and may provide information on the retrieved image forming apparatus to the user terminal apparatus 100.

79 In addition, the user may transmit own movement path information together with the reservation printing command described above, and in this case, the cloud server 300 may retrieve the image forming apparatus which may be printed on the path at the reservation printing time point described above, and may provide information on the retrieved image forming apparatus to the user terminal apparatus 100. The above-mentioned embodiment will be described below in more detail with reference to FIG. 2.

**80** A configuration and operation of such a user terminal apparatus 100 will be described below with reference to FIGS. 3, 4, and 5.

**81** The image forming apparatuses 200-1 and 200-2 are connected to the user terminal apparatus 100 and the cloud server 300 over a network. In addition, the image forming apparatuses 200-1 and 200-2 receive the printing data from the user terminal apparatus 100 or the cloud server 300, and print the received printing data. If the image forming apparatuses 200-1 and 200-2 support a direct printing which may print the file itself, the image forming apparatuses 200-1 and 200-2 may also receive the file itself to perform the printing task.

**82** The image forming apparatuses 200-1 and 200-2 do not directly perform the printing for the received printing data, but may perform the printing task for the printing data received at a time point at which the user is certificated. That is, in the case in which the image forming apparatuses 200-1 and 200-2 support a full printing, the image forming apparatuses 200-1 and 200-2 may perform the printing task only in the case in which the user certification is performed in the image forming apparatuses 200-1 and 200-2.

83 In this case, the image forming apparatuses 200-1 and 200-2 may perform an edition for the received printing data to perform the printing task. For example, the image forming apparatuses 200-1 and 200-2 may perform an edition in which a letterspacing within each of pages configuring the received printing data is increased, may discriminately display a specific phrase (e.g., a recited phrase) within the printing data, may print only the text within the printing data, or may print only the image within the printing data. The embodiment described above will be described below with reference to FIGS. 28, 29, 30, and 31.

84 A configuration and operation of such image forming apparatuses 200-1 and 200-2 will be described below with reference to FIG. 6.

85 The cloud server 300 is connected to the image forming apparatus 200 and the user terminal apparatus 100 over a network. In addition, the cloud server 300 stores usage histories for a plurality of files for each of the users.

86 In addition, if the cloud server 300 receives the request for the file list from the user terminal apparatus 100, the cloud server 300 may retrieve files of the user corresponding to the user terminal apparatus 100, and may generate an aligned file list for the retrieved files based on the usage history for the retrieved files. In this case, if at least one of the retrieved files has a plurality of usage histories, the cloud server 300 may generate a file list including the plurality of usage histories.

87 In addition, the files of the user are stored in a plurality of storages, and the cloud server 300 may generate a plurality of file lists as described above for each of the plurality of storages.

88 In addition, the cloud server 300 may transmit the generated file lists to the user terminal apparatus 100 requesting the file lists.

89 If the cloud server 300 receives the printing reservation command from the user terminal apparatus, the cloud server 300 may retrieve at least one image forming apparatus which is available on a user path corresponding to path information among a plurality of image forming apparatuses which may be connected to the cloud server 300 based on the reservation time information and the path information included in the received printing reservation command, and may provide information on the retrieved image forming apparatus at a time point corresponding to the reservation time information to the user terminal apparatus 100.

**90** In this case, if the printing reservation command includes option information, the cloud server 300 may retrieve the image forming apparatus corresponding to the option information. For example, in the case in which a printing option selected by the user is a color printing, the cloud server 300 may retrieve only the image forming apparatus which may perform the color printing among the image forming apparatuses which are available on the user path corresponding to the path information.

**91** In the case in which a file of which the printing is requested by the user is stored in another file server (not shown), the cloud server 300 may acquire a corresponding document file, convert the corresponding document file into the printing data which is available to the selected image forming apparatus 200-1, and provide the converted printing data to the image forming apparatus 200-1. A configuration and operation of the cloud server 300 will be described below with reference to FIGS. 7 and 8.

92 As described above, the image forming system 1000 according to the present embodiment may retrieve the file with a behavior of the user related to the corresponding file as well as the title, the storing place, and the keyword which are directly related to the file, thereby making it possible to improve convenience of the user.

93 In addition, the image forming system 1000 according to the present embodiment supports the reservation printing, thereby making it possible to perform the printing task at a time point requested by the user. In addition, the information of the image forming apparatus is provided by considering the movement path of the user, and accordingly, the printing task may be performed, thereby making it possible for the user to easily perform the printing task on the movement path.

94 In addition, the image forming system 1000 according to the present embodiment may edit the printing data by selecting only any one of various layouts, thereby making it possible to improve convenience of the user.

95 In addition, the image forming system 1000 according to the present embodiment may easily merge a plurality of contents according to an intention of the user through synchronization between the user terminal apparatuses, thereby making it possible to also improve convenience of the user.

96 In addition, although FIG. 1 illustrates the case in which two image forming apparatuses are disposed in the image forming system 1000, at the time of implementation, three or more image forming apparatuses may be disposed, and a plurality of user terminal apparatuses may also be disposed.

97 In addition, although FIG. 1 illustrates the case in which the respective configurations are directly connected to each other, at the time of implementation, the respective configurations may be indirectly connected to each other through a router, a wireless router, and the like, and may be connected to each other in a wireless scheme, not in a wired scheme.

98 FIG. 2 is a diagram of a method for controlling a print according to the present disclosure according to an embodiment of the present disclosure.

99 A general print operation will be first described with reference to FIG. 2.

**100** Referring to FIG. 2, in the case of a general print, the user may select a file of which a printing task may be performed in a first user terminal apparatus 100-1. In this case, the first user terminal apparatus 100-1 may generate printing data for the selected file and transmit the generated printing data to the image forming apparatus 200 (①). In the case in which the image forming apparatus 200 supports a direct printing, the first user terminal apparatus 100-1 does not convert the file into the printing data, but transfers the file itself, thereby making it possible to also perform the printing task.

101 In addition, in the case in which the image forming apparatus 200 supports the full printing, the first user terminal apparatus 100-1 may transmit user information (or certification information) together with a provision of the printing data or the file. In this case, the image forming apparatus 200 may perform the printing task for the printing data or the file which is provided after the certification information of the user is input onto the image forming apparatus 200.

102 In addition, in the case in which a print limitation for each of accounts of the user is set, the image forming apparatus 200 may perform the printing task after the cloud server 300 confirms that it is acceptable to perform the printing task before immediately printing the received printing data. In addition, the image forming apparatus 200 may transmit history data of the printing task to the cloud server 300.

103 In performing the general print, although it is illustrated and described that the printing data or the file is directly transferred to the image forming apparatus from the first user terminal apparatus, at the time of implementation, it is also possible to implement a form in which the printing data is transferred to the image forming apparatus 200 from the cloud server 300, after being transmitted to the cloud server 300 from the first user terminal apparatus 100-1.

104 Hereinafter, a reservation printing operation will be described.

105 First, the user selects a file of which the printing task is to be performed in the first user terminal apparatus 100-1. In addition, the user may set time information, print option information, path information, and the like at which the reservation printing task is performed. in the case in which the first user terminal apparatus 100-1 and the second user terminal apparatus 100-2 are classified as illustrated in FIG. 2, the first user terminal apparatus 100-1 may simultaneously transmit identification information for the second user terminal apparatus 100-2. At the time of implementation, information on the second user terminal apparatus 100-2 may be pre-stored in the cloud server 300.

106 If the reservation printing command is input after the setting operation of the user, the first user terminal apparatus 100-1 may transmit the input set information and the file described above to the cloud server 300 (①).

107 If the file of the print target is pre-stored in the cloud server 300, the transmission of the file may be omitted. In addition, in the case in which the printing command of the user is not the printing for the file stored in the first user terminal apparatus 100-1, the first user terminal apparatus 100-1 may transmit information on a storage in which the corresponding file is stored, instead of the transmission of the file described above. For example, the user may also input the reservation printing command for the file stored in the file server as well as the printing command for the file stored in the first user terminal apparatus 100-1. In this case, the first user terminal apparatus 100-1 may transmit address information of the file instead of the transmission of the file.

108 The cloud server 300 receiving the reservation printing command preferentially stores the received file and the set information (②). Thereafter, the cloud server 300 may retrieve the image forming apparatus which is available to the user at a reservation time point. For example, the cloud server 300 may retrieve the image forming apparatus which is available on the movement path of the user based on the received path information. In this case, the cloud server 300 may retrieve the image forming apparatus which is available to the user by considering the received option information. For example, in the case in which the user selects the color printing as an option, the cloud server 300 may retrieve only the image forming apparatus which may perform the color printing among the image forming apparatuses which are available on the movement path of the user.

**109** If the retrieval for the image forming apparatus is completed, the cloud server 300 may notify the second user terminal apparatus 100-2, which is a portable terminal of the user, that the retrieval completion is the reservation time point(③). In this case, the cloud server 300 may simultaneously transmit information (e.g., position information) on the retrieved image forming apparatus.

**110** The second user terminal apparatus 100-2 notified of a printing reservation time point may display the printing reservation time point (④). In the case in which the received information includes a plurality of image forming apparatuses, the second user terminal apparatus 100-2 may select an image forming apparatus of which a printing task is performed. In this case, the second user terminal apparatus 100-2 may request the selected image forming apparatus 200 to perform the printing task (⑤).

**111** The image forming apparatus 200 receiving the above-mentioned request may request the cloud server 300 to transmit the printing data corresponding to the reservation printing command and may receive the requested printing data, and may perform the printing for the received printing data. At the time of implementation, an execution request may be transmitted to the cloud server 300, and the cloud server 300 may transmit the printing data and the user certification information to the image forming apparatus selected by the user. In addition, if certification information corresponding to the user certification information is input from the user, the image forming apparatus 200 may print the received printing data corresponding to the user certification information.

**112** In addition, the image forming system 1000 according to the present embodiment supports the reservation printing, thereby making it possible to perform the printing task at a time point requested by the user. In addition, the information of the image forming apparatus is provided by considering the movement path of the user, and accordingly, the printing task may be performed, thereby making it possible for the user to easily perform the printing task on the movement path.

**113** Hereinabove, the first user terminal apparatus 100-1 and the second user terminal apparatus 100-2, that is, two apparatuses are used, but at the time of implementation, the reservation printing command of the user may be performed by the second user terminal apparatus 100-2, and in this case, the above-mentioned operations may be implemented by only one user terminal apparatus.

**114** In addition, FIG. 2 illustrates only one image forming apparatus, but there may be a plurality of image forming apparatuses retrieved on the movement path. In addition, FIG. 2 illustrates a case in which the second user terminal apparatus directly requests the image forming apparatus to perform the printing task of the execution request, but the second user terminal apparatus 100-2 may provide information on the image forming apparatus performing the printing task among the retrieved image forming apparatuses to the cloud server 300, and in this case, the cloud server 300 may provide user information together with the printing data to the image forming apparatus corresponding to the received information on the image forming apparatus to allow the printing task to be performed.

115 FIG. 3 is a block diagram of a user terminal apparatus according to an embodiment of the present disclosure.

116 Referring to FIG. 3, the user terminal apparatus 100 of FIG. 3 may be specifically implemented in various kinds of apparatuses such as a television (TV), a personal computer (PC), a laptop PC, a cellular phone, a tablet PC, a personal digital assistant (PDA), a Moving Picture Experts Group phase 1 or phase 2 (MPEG-1 or MPEG-2) audio layer 3 (MP3) player, a kiosk, an electronic picture frame, and the like. When the user terminal apparatus 100 is implemented in portable kinds of apparatuses such as the cellular phone, the tablet PC, the PDA, the MP3 player, the laptop PC, and the like, the user terminal apparatus 100 may also be named as a mobile device, but is collectively called the user terminal apparatus in the present specification.

117 Referring to FIG. 3, the user terminal apparatus 100 may include a communicator 110 (e.g., a transceiver), a touch screen 120, and a processor 130. Here, the user terminal apparatus 100 may serve as the first user terminal apparatus 100-1 of FIG. 2, and may also serve as the second user terminal apparatus 100-2 of FIG. 2.

118 The communicator 110 is formed to connect the user terminal apparatus 100 to an external device (not shown), and may be connected to the external device via a local area network (LAN) and an Internet network as well as by a mobile communication scheme (e.g., global system for mobile communications (GSM), universal mobile telephone system (UMTS), long-term evolution (LTE), wireless broadband (WiBRO), or the like).

119 In addition, the communicator 110 may receive contents from another user terminal apparatus (not shown). Here, the received contents may be a moving image file and an image file. In addition, the communicator 110 may receive a synchronization command at the same time of the reception of the contents described above. At the time of implementation, the communicator 110 may transmit the synchronization command to another user terminal apparatus (not shown) to also receive the contents in response to the corresponding synchronization command.

120 In addition, the communicator 110 may transmit the file stored in the user terminal apparatus 100 to another user terminal apparatus (not shown), the image forming apparatus 200, the cloud server 300, a private file server (not shown), and the like. In addition, the communicator 110 may transmit the printing data to the image forming apparatus 200 or the cloud server 300. Here, the printing data may be data of a printer language such as postscript (PS), printer control language (PCL), or the like, and in the case in which the image forming apparatus 200 supports the direct printing, the printing data may also be a file itself such as portable document format (PDF), extensible markup language (XML) paper specification (XPS), bitmap (BMP), joint photographic experts group (JPG), or the like.

121 In addition, the communicator 110 may provide user information to the cloud server 300. Here, as long as the user information is information capable of identifying the user with ID of a user, a name of a user, a phone number of a user, or the like, any other information than the above-mentioned examples may also be used.

122 In addition, the communicator 110 may receive a file list including usage history information for a plurality of files from the cloud server 300. Here, the file list, which is a file list corresponding to the user, may include information such as a name, a final modified time, a size, a storage position, a usage history, and the like for each of the files.

123 In addition, the communicator 110 may request the cloud server 300 or the image forming apparatus 200 to perform a function processing for the file. For example, the communicator 110 may request the image forming apparatus 200 to perform a print processing for the file, request the cloud server 300 to perform a print processing for a specific file, request the cloud server 300 to perform a distribution for the specific file, or request the cloud server 300 to perform a reservation print for the specific file.

124 In the case in which the function processing request described above is a reservation printing command, the communicator 110 may transmit the reservation printing command including information of the file, reservation time information, and user path information to the cloud server 300.

125 In addition, the communicator 110 may receive notification information notifying a reservation printing time point from the cloud server 300. Such notification information may include information notifying that it is a time to print and information (specifically, position information) of the image forming apparatus which is printable during the movement path of the user. At the time of implementation, the position information of the image forming apparatus is not received from the cloud server 300, but may also be received from the image forming apparatus 200.

126 In addition, the communicator 110 may transmit an execution command of the reservation printing to the image forming apparatus 200. Here, the execution command may be the user information capable of identifying the user, or may be identification information corresponding to the reservation printing command which is previously transmitted to the cloud server 300. At the time of implementation, such execution command may also be transmitted to the cloud server 300, not the image forming apparatus 200.

127 In addition, the communicator 110 may receive information on the function which may be performed by the image forming apparatus transmitting the printing command. In addition, the communicator 110 may transmit a function command and an option command for a function to the image forming apparatus 200. In this case, the option command may be a layout selection command for the printing data which is pre-transmitted.

128 In addition, the communicator 110 may transmit a document edition command to the cloud server 300. Here, the document edition command is a plurality of file information and template information selected by the user among a plurality of files which are available to the user. In the case in which at least one of the selected files is stored in the user terminal apparatus 100, the communicator 110 may transmit the corresponding file to the cloud server 300.

129 In addition, the communicator 110 may receive a preview image for a new file generated according to the above-mentioned document edition command from the cloud server 300. In addition, the communicator 110 may transmit a printing command for the generated new file, or a modification command to the cloud server 300.

130 In addition, the communicator 110 may transmit a layout modification command for the previously transmitted printing data.

131 The touch screen 120 may display icons of several applications which are pre-installed in the user terminal apparatus 100. In addition, the touch screen 120 may select any one of displayed icons of several applications. Here, the selected application may be a printer driver, a scan driver, a printer application, and the like for controlling a function of the image forming apparatus. If a program is driven in response to the selection of the user, the touch screen 120 may receive a file to be printed, a print option, and the like, and may receive a printing command.

132 In the case in which the function selected by the user is the reservation printing command, the touch screen 120 may further receive the movement path information of the user, the reservation time information, and the like.

133 In the present embodiment, the touch screen 120 in which a display function and an input function may be performed in one configuration is used, but at the time of implementation, a combination of a display device and an input device such as a keyboard, a mouse, or the like may also be implemented.

134 In the case in which the document file is being edited, the touch screen 120 may display the document file which is currently being edited. In this case, the touch screen 120 may simultaneously display a cursor indicating a specific position of the document file is currently being edited.

135 In this situation, if the touch screen 120 receives the contents and the synchronization command from another user terminal apparatus, the touch screen 120 may display the document file in which the received contents are merged into the currently displayed position of the cursor. In the case in which the received contents include mathematical expressions, the touch screen 120 may display the document file into which only the mathematical expressions extracted from the received contents are merged.

136 The touch screen 120 may display the received file list. For example, the touch screen 120 may display file information included in the received file list. For example, the touch screen 120 may align and display the files in a time sequence based on the usage history for each of the plurality of files based on the received file list, and may display a plurality of histories for the file with a sub-item for at least one file. In this case, the touch screen 120 may classify and display the plurality of files for each day based on the usage history, or may also classify and display the plurality of files for each storage position of each of the plurality of files.

137 In addition, the touch screen 120 may receive retrieval information from the user. In this case, the touch screen 120 may display a user interface (UI) for receiving the above-mentioned retrieval information, and may receive the retrieval information on the displayed UI. Here, the retrieval information, which is a retrieval keyword for the user to retrieve the specific file, may be, for example, a title of a file, a storage place, a keyword, time information, and the like.

**138** In addition, the touch screen 120 may display retrieval results corresponding to the received retrieval information. In this case, the touch screen 120 may align and display the retrieval results according to a preset condition. In this case, the preset condition may be an ascending order and a descending order of the file name, the file size, the final modification time, a recent usage history, and the like.

139 In addition, the touch screen 120 may receive a control command for performing various functions for the files stored in the user terminal apparatus 100 or the files stored in various storages from the user. Here, the control command may be an edition for the file, a printing for the file, a reservation printing for the file, a distribution to another user (e.g., e-mail transmission, social network service (SNS) sharing, etc.), an uploading to another storage, and the like.

**140** If the touch screen 120 receives the printing command for the file from the user, the touch screen 120 may display a list of connectable image forming apparatuses, and may select the image forming apparatus of which the printing task is to be performed.

**141** In addition, if the touch screen 120 receives the edition command for the file from the user, the touch screen 120 may display a UI screen of an application program corresponding to the file.

**142** In addition, if the touch screen 120 receives the distribution command to another user for the file from the user, the touch screen 120 may display a list of other users based on address information which is prestored in the user terminal apparatus 100, and may select one of other users.

**143** In addition, if the touch screen 120 receives the reservation printing command for the file from the user, the touch screen 120 may further receive information such as the movement path information (e.g., destination information), the reservation printing time information, and the like from the user. Here, the movement path information is an expectation path on which the user is to be positioned at the reservation time, and in the case in which a current position is known, the touch screen 120 may receive only the destination information. If the user is directed to a destination from a position different from the current position at the reservation time, the touch screen 120 may simultaneously receive a departure position and a destination position.

144 In addition, the reservation printing time may be a time for starting a movement of the user, may be a time for obtaining a final print output, and may be a time for arriving at the destination after completion of the printing.

145 In addition, the touch screen 120 displays the notification information. For example, the touch screen 120 may display the notification information received from the cloud server 300 through the communicator 110. Here, the displayed notification information may include only information indicating that the printing reservation time has come, and may include information of the image forming apparatuses which are printable on the movement path retrieved by the cloud server 300.

146 In the case in which the plurality of image forming apparatuses are included in the notification information, the touch screen 120 may select an image forming apparatus of which a printing task is to be performed.

147 The touch screen 120 may display a function that may be performed by a pre-selected image forming apparatus as a menu, and may select any one of function menus. In addition, the touch screen 120 may display an option menu associated with the pre-selected function, and may select an option associated with the corresponding function using the displayed option menu.

148 In addition, the touch screen 120 may select the layout modification command for the previously transmitted printing data. For example, the touch screen 120 may display examples of layouts that may be applied to the printing data previously transmitted to the image forming apparatus 200 or the cloud server 300, and may select one layout of the layouts. An example thereof will be described with reference to FIG. 31.

149 In addition, if the touch screen 120 receives a new document generation command, the touch screen 120 may display a plurality of templates that are applicable, and may select one of the plurality of templates. In addition, the touch screen 120 may select a plurality of files to be input to the corresponding template, and may select a position of the template on the layout for each of the files.

150 In addition, the touch screen 120 may display a preview image for a new file generated according to the above-mentioned selection. Here, the displayed preview image may be a preview image generated by the cloud server 300, and may also be a preview image generated by the user terminal apparatus 100.

151 The processor 130 controls the respective configurations in the user terminal apparatus 100. For example, if the processor 130 receives a program driving command for performing a function control of the image forming apparatus, the processor 130 may drive a printer program and may control the touch screen 120 so that a user interface (UI) provided by the program is displayed. Such processor 130 may be referred to as a controller in that it controls the respective configurations in the user terminal apparatus 100, and may be implemented as a central processing unit (CPU), a microprocessor, an application specific integrated circuit (ASIC), or the like.

**152** If the processor 130 receives a function to be performed by the image forming apparatus and option information corresponding to the corresponding function from the user, the processor 130 may control the communicator 110 so that a function execution command including the function and the option information is transmitted to the selected image forming apparatus. If the function selected by the user is a reservation printing function, the processor 130 may transmit the reservation printing command including the received path information (or destination information) and the reservation time information to the cloud server 300.

**153** In addition, if the processor 130 receives a program driving command for performing a file management for the user, the processor 130 may drive the above-mentioned file management program and may control the touch screen 120 so that a UI provided by the above-mentioned file management program is displayed. Hereinabove, although the printer program and the file management program are separately described, these programs may also be implemented as a single program at the time of implementation.

**154** If the file management program is driven, the processor 130 may control the communicator 110 so that the user information is transmitted to the cloud server 300, and if the processor 130 receives the file list corresponding to the user information from the cloud server 300, the processor 130 may control the touch screen 120 so that the received file list is displayed.

**155** In addition, if the processor 130 receives an edition command for the file, the processor 130 may drive an application program corresponding to a kind of the corresponding file and may control the touch screen 120 so that a UI provided by the corresponding application program is displayed. In addition, if processor 130 receives a synchronization command and the contents from another user terminal apparatus during an edition of the file, the processor 130 may merge the received contents into a preset position of a document file which is currently being edited. Here, the preset position may be, for example, a mouse cursor, or may be an area which is being typed by the user.

**156** In addition, if the received contents include the mathematical expressions or the texts, the processor 130 may perform the OCR for the received contents to add the texts or the mathematical expressions, which are results obtained by performing the OCR to the file which is currently being edited.

**157** In addition, the processor 130 may generate a new file according to the document edition command of the user. For example, if the processor 130 selects the template and the plurality of files which are to be applied to the template, the processor 130 may dispose an image corresponding to the plurality of files in the template to generate the new file. In addition, the processor 130 may control the touch screen 120 so that a preview image for the new file is displayed. Such generation of the new file and the generation of the preview image may be performed by the cloud server 300, and in this case, the processor 130 may control the communicator 110 so that the template information and the file information selected by the user are transmitted to the cloud server 300.

**158** In addition, if the processor 130 receives the layout modification command for the previously transmitted printing data from the user, the processor 130 may control the communicator 110 so that the corresponding modification command is transmitted to the cloud server 300 or the image forming apparatus 200. In addition, if the processor 130 receives the preview image in response to the above-mentioned modification command, the processor 130 may control the touch screen 120 so that the preview image is displayed.

159 As described above, the user terminal apparatus 100 according to the present embodiment may retrieve the file with a behavior of the user related to the corresponding file as well as the title, the storing place, and the keyword which are directly related to the file, thereby making it possible to improve convenience of the user.

**160** In addition, the user terminal apparatus 100 according to the present embodiment supports the reservation printing, thereby making it possible to perform the printing task at a time point requested by the user. In addition, the information of the image forming apparatus is provided by considering the movement path of the user, and accordingly, the printing task may be performed, thereby making it possible for the user to easily perform the printing task on the movement path.

**161** In addition, the user terminal apparatus 100 according to the present embodiment may easily merge a plurality of contents according to an intention of the user through synchronization between the user terminal apparatuses, thereby making it possible to also improve convenience of the user.

**162** Although FIG. 3 describes the case in which the user terminal apparatus 100 receives the file list from the cloud server 300 and aligns the files based on the usage history in the received file list to display the information of the file, at the time of implementation, the cloud server 300 receives the UI information to be displayed on the user terminal apparatus 100, and the user terminal apparatus 100 may display the received UI information.

163 Hereinabove, although only simple configurations configuring the user terminal apparatus have been illustrated and described, at the time of implementation, various configurations may be additionally included. This will be described below with reference to FIG. 4.

**164** FIG. 4 is a block diagram of a user terminal apparatus according to an embodiment of the present disclosure.

165 Referring to FIG. 4, the user terminal apparatus 100 may include the communicator 110, the touch screen 120, the processor 130, a storage 140, a global positioning system (GPS) chip 150, a video processor 160, an audio processor 170, a button 125, a microphone 180, an imager 185, and a speaker 190.

166 The communicator 110 is a component performing communication with various types of external devices according to various types of communication schemes. The communicator 110 includes a Wi-Fi chip 111, a Bluetooth chip 112, a wireless communication chip 113, and a near field communications (NFC) chip 114. The processor 130 performs communication with a variety of external devices using the communicator 110.

167 The Wi-Fi chip 111 and the Bluetooth chip 112 perform the communication in a Wi-Fi scheme and a Bluetooth scheme, respectively. In the case in which the Wi-Fi chip 111 or the Bluetooth chip 112 is used, a variety of access information such as SSID, a session key, and the like may be first transmitted and received, a communication access may be performed using the variety of access information, and a variety of information may be then transmitted and received. The wireless communication chip 113 means a chip that performs communication according to various communication standards such as Institute of Electrical and Electronics Engineers (IEEE), ZigBee, 3rd generation (3G), 3rd generation partnership project (3GPP), LTE, and the like. The NFC chip 114 means a chip which is operated in the NFC scheme that uses a frequency band of 13.56MHz among various RF-ID frequency bands such as 135kHz, 13.56MHz, 433MHz, 860 to 960MHz, 2.45GHz, and the like.

168 Such NFC chip 114 may be used for certificating the user in the image forming apparatus 200. For example, if the user terminal apparatus 100 is positioned in the NFC chip of the image forming apparatus 200, the NFC chip 114 may transmit the user information to the image forming apparatus 200 to perform the user certification.

169 In addition, the NFC chip 114 may transmit the execution command of the reservation printing to the image forming apparatus 200.

170 The touch screen 120 may display the file information included in the received file list as described above, and may display a user interface window for receiving a user control command for the displayed file information. The touch screen 120 may be implemented as various forms of displays such as a liquid crystal display (LCD), organic light emitting diodes (OLED) display, a plasma display panel (PDP), and the like. The touch screen 120 may include a driving circuit, a backlight unit, and the like which may be implemented in forms such as an amorphous silicon thin film transistor (a-si TFT), a low temperature poly silicon (LTPS) TFT, an organic TFT (OTFT), and the like. In addition, the touch screen 120 may also be implemented as a flexible display.

171 The touch screen 120 may include a touch sensor for sensing a touch gesture of the user. The touch sensor may be implemented as various types of sensors such as a capacitive type, a resistive type, a piezoelectric type, and the like. The capacitive type means a scheme calculating a touch coordinate by sensing micro-electricity exited into a body of the user when a portion of the body of the user touches a surface of the touch screen, using a dielectric coated on the surface of the touch screen. The resistive type means a scheme including two electrode plates embedded in the touch screen and calculating the touch coordinate by sensing that upper and lower plates of a touched point contact with each other to allow a current to flow, when the user touches the screen. In the case in which the user terminal apparatus 100 supports a pen input function, the touch screen 120 may also sense the user gesture using an input means such as a pen other than a finger of the user. In the case in which the input means is a stylus pen including a coil, the user terminal apparatus 100 may also include a magnetic field sensing sensor capable of sensing a magnetic field which is changed by the coil in the stylus pen. Accordingly, the touch screen may also sense an adjacent gesture, that is, a hovering as well as the touch gesture.

**172** Hereinabove, although it is described that one touch screen 120 performs both a display function and a sensing function of the touch gesture, at the time of implementation, the display function and the sensing function of the gesture may be performed in different configurations. That is, the touch screen 120 may also be implemented by combining a display device capable of displaying only an image and a touch panel capable of sensing only a touch.

173 The storage 140 may store a variety of programs and data which are required to operate the user terminal apparatus 100. For example, the storage 140 may store the program, the data, and the like for configuring a variety of Uls configuring the user interface window.

**174** In addition, the storage 140 stores a variety of contents. Here, the contents may be a printable document file, an image file, and the like. In addition, the storage 140 may store a plurality of phone numbers.

**175** In addition, the storage 140 may store the contents received from another user terminal apparatus (not shown), and may store the mathematical expressions or the texts extracted from the received contents. In addition, the storage 140 may store the printing data for the file.

176 In addition, the storage 140 stores a plurality of applications. Here, at least one application may be a printer driver, a scan driver, a printer application, a file management application, and the like for performing the operations as described in the present disclosure.

177 The processor 130 may display the user interface window on the touch screen 120 using the programs and the data stored in the storage 140. In addition, if the user touches a specific region of the user interface window, the processor 130 performs a control operation corresponding to the touch.

178 The processor 130 may include a random access memory (RAM) 131, a read only memory (ROM) 132, a CPU 133, a graphic processing unit (GPU) 134, and a bus 135. The RAM 131, the ROM 132, the CPU 133, the GPU 134, and the like may be connected to each other through the bus 135.

**179** The CPU 133 accesses the storage 140 and performs a booting using an operating system (O/S) stored in the storage 140. In addition, the CPU 133 performs various operations using a variety of programs, contents, data, and the like stored in the storage 140.

**180** The ROM 132 stores a set of instructions for booting a system, and the like. When turn-on instruction is input to supply power to the CPU 133, the CPU 133 copies an O/S stored in the storage 140 to the RAM 131 according to the instructions stored in the ROM 132, and executes the O/S to boot the system. When the booting is completed, the CPU 133 copies a variety of programs stored in the storage 140 in the RAM 131, and executes the programs copied in the RAM 131 so as to perform a variety of operations.

**181** When the booting of the user terminal apparatus 100 is completed, the GPU 134 displays the Ul on the touch screen. For example, the GPU 134 may generate a screen including various objects such as an icon, an image, a text, and the like using a calculator (not shown) and a renderer (not shown). The calculator calculates attribute values such as coordinate values, shapes, sizes, colors, and the like in which the respective objects are to be displayed according to a layout of the screen. The renderer generates the screen of various layouts including the objects based on the attribute values calculated by the calculator. The screen (or the user interface window) generated by the renderer may be provided to the touch screen 120, and the touch screen 120 may display the provided screen.

**182** The GPS chip 150 is a component receiving a GPS signal from a GPS satellite to calculate a current position of the user terminal apparatus 100. When the processor 130 uses a navigation program or otherwise a current position of the user is required, the processor 130 may calculate the position of the user using the GPS chip 150. For example, if the processor 130 receives the reservation printing command, the processor 130 may calculate the current position using the GPS chip 150, and may transmit the current position calculated together with the destination information received from the user to the cloud server 300 as the path information.

**183** In addition, if the processor 130 receives alarm information from the cloud server 300, the processor 130 may calculate the current position using the GPS chip 150, and may transmit the calculated current position to the cloud server 300. Accordingly, the cloud server 300 may also retrieve the image forming apparatuses 200 which are available on the movement path by considering the current position of the user terminal apparatus 100. At the time of implementation, the processor 130 may also generate position information by considering position information calculated by WiFi or the wireless communication module as well as position information calculated by the GPS chip 150.

**184** The video processor 160 is a component for processing the contents received through the communicator 110, or video data included in the contents stored in the storage 140. The video processor 160 may perform various image processes such as decoding, scaling, noise filtration, frame rate conversion, resolution conversion, etc. for the video data.

**185** The audio processor 170 is a component for processing the contents received through the communicator 110, or audio data included in the contents stored in the storage 140. The audio processor 170 may perform various processes such as decoding, amplification, noise filtration, etc. for the audio data.

**186** When a playback application for multimedia contents is executed, the processor 130 may drive the video processor 160 and the audio processor 170 to playback the corresponding contents. In this case, the touch screen 120 may display the image frame generated by the video processor 160 on at least one area of a main display area and a sub-display area.

**187** The speaker 190 outputs the audio data generated by the audio processor 170.

188 The button 125 may be various types of buttons such as a mechanical button, a touch pad, a wheel, etc. formed in any region such as a front part, a side part, a rear part, or the like of the exterior of a body of the user terminal apparatus 100. Such button 125 may include a '+' button receiving a command increasing a volume, and a '-' button receiving a command decreasing a volume, all which are disposed on the side part of the exterior of the body.

189 The microphone 180 is a configuration for receiving and converting a voice of the user or other sounds into the audio data. The processor 130 may use the voice of the user received through the microphone 180 during a call process, or convert the voice of the user into the audio data, so as to be stored in storage 140. The microphone 180 may include a stereo microphone receiving sound inputs from a plurality of positions.

190 The imager 185 is a configuration for imaging a still image or a moving image according to a control of the user. The imager 185 may be implemented by a plurality of cameras such as a front camera and a rear camera. As described above, the imager 185 may be used as a means for obtaining an image of the user in an example for tracking a gaze of the user.

191 In a case in which the imager 185 and the microphone 180 are provided, the processor 130 may also perform a control operation according to the voice of the user input through the microphone 180 or a user motion recognized by the imager 185. That is, the user terminal apparatus 100 may be operated in a motion control mode or a voice control mode. In the case in which the user terminal apparatus 100 is operated in the motion control mode, the processor 130 activates the imager 185 to image the user, and tracks a change in the motion of the user to perform a control operation corresponding to the change in the motion of the user. In the case in which the user terminal apparatus 100 is operated in the voice control mode, the processor 130 may analyze the voice of the user input through the microphone 180, and may also be operated in a voice recognizing mode performing a control operation according to the analyzed voice of the user.

192 In the user terminal apparatus 100 supporting the motion control mode or the voice control mode, a voice recognizing technology or a motion recognizing technology may be used in various embodiments described above. For example, if the user takes a motion selecting an object displayed on a home screen, or says a voice instruction corresponding to the object, it may be determined that the corresponding object is selected and a control operation matched to the object may be performed.

193 Although not illustrated in FIG. 4, according to various embodiments, the user terminal apparatus 100 may further include a USB port to which an USB connector may be connected, various external input ports for connection with various external terminals such as a headset, a mouse, a LAN, and the like, a digital multimedia broadcasting (DMB) chip for receiving and processing a DMB signal, various sensors, and the like.

**194** FIG. 5 is a diagram of a software configuration of a user terminal apparatus according to an embodiment of the present disclosure.

195 Referring to FIG. 5, the storage 140 may store software including an O/S 410, a kernel 420, middleware 430, an application 440, and the like.

196 The O/S 410 performs a function that controls and manages an overall operation of hardware. That is, the O/S 410 is a layer which is responsible for a basic function such as a hardware management, a memory, security, or the like. Hereinabove, although it is illustrated and described that only one O/S is provided, a plurality of O/Ss may also be provided at the time of implementation.

197 The kernel 420 serves as a passage transmitting a variety of signals including the touch signal sensed by the touch screen 120 to the middleware 430.

198 The middleware 430 includes a variety of software modules that control an operation of the user terminal apparatus 100. For example, the middleware 430 may include an X11 module 430-1, an APP manager 430-2, a connection manager 430-3, a security module 430-4, a system manager 430-5, a multimedia framework 430-6, an Ul framework 430-7, a window manager 430-8, and the like.

199 The X11 module 430-1 is a module that receives a variety of event signals from a variety of hardware included in the user terminal apparatus 100. Here, the event may be variously set such as an event in which a user gesture is sensed, an event in which the user terminal apparatus 100 is moved in a specific direction, an event in which a system alarm is generated, an event in which a specific program is executed or terminated, and the like.

**200** The APP manager 430-2 is a module that manages an execution state of a variety of applications 440 installed in the storage 140. If the APP manager 430-2 senses an application execution event from the X11 module 430-1, the APP manager 430-2 calls and executes an application corresponding to the corresponding event. For example, if the user selects an icon of a printer application, the APP manager 430-2 may call and execute the printer application.

201 The connection manager 430-3 is a module for supporting a wired or wireless network connection. The connection manager 430-3 may include various sub-modules such as a DNET module, a Universal Plug and Play (UPnP) module, and the like. For example, if the printer application is executed, the connection manager 430-3 may form a session with the image forming apparatus 200.

202 The security module 430-4 is a module for supporting certification, request permission, secure storage, and the like for hardware.

203 The system manager 430-5 monitors states of the respective components in the user terminal apparatus 100 and provides the monitored results to other modules. For example, if a case in which a battery remainder is lack or error occurs, a case in which a communication connection state is disconnected, and the like occur, the system manager 430-5 may provide the monitored results to the Ul framework 430-7 to output a notification message or a notification sound.

204 The multimedia framework 430-6 is a module for reproducing multimedia contents stored in the user terminal apparatus 100 or provided from an external source. The multimedia framework 430-6 may include a player module, a camcorder module, a sound processing module, and the like. Accordingly, the multimedia framework reproduces a variety of multimedia contents to perform an operation generating and reproducing the screen and the sound.

**205** The UI framework 430-7 is a module for providing a variety of UIs to be displayed on the touch screen 120. The UI framework 430-7 may include an image compositor module configuring a variety of objects, a coordinate compositor module calculating a coordinate at which the object is to be displayed, a rendering module rendering the configured object to the calculated coordinate, a 2D/3D UI toolkit providing a tool for configuring a 2D or 3D form of UI, and the like.

**206** The window manager 430-8 may sense a touch event using a body of the user or a pen, or other input events. If the window manager 430-8 senses the above-mentioned event, the window manager 430-8 transmits an event signal to the UI framework 430-7 to perform an operation corresponding to the event.

**207** The window manager 430-8 may also store various program modules such as a writing module for drawing a line along a drag trajectory when the user touches and drags the screen, an angle calculation module for calculating a pitch angle, a roll angle, a yaw angle, and the like based on a sensor value sensed by a gyro sensor of the user terminal apparatus 100, an OCR module for extracting the text or the mathematical expression from the image file, and the like.

**208** The application module 440 includes applications 440-1, 440-2, to 440-n for supporting various functions. For example, the application module 440 may include application modules for providing various services such as a printer application module, a file management application module, a navigation application module, a game module, an electronic book module, a calendar module, an alarm management module, and the like. The above-mentioned applications may also be installed by default, and may also be arbitrarily installed and used by the user during a use process. If the icon object of the user interface window is selected, the CPU 133 may execute an application corresponding to the selected icon object using the application module 440.

**209** The structure of software illustrated in FIG. 5 is merely an example, and is not to be necessarily limited thereto. Therefore, in some cases, some thereof may also be omitted, modified, or added. For example, the storage 140 may also additionally include various programs such as a sensing module for analyzing signals sensed by a variety of sensors, a messaging module such as a messenger program, a short message service (SMS) & multimedia message service (MMS) program, an e-mail program, or the like, a call info aggregator program module, a voice over internet protocol (VoIP) module, a web browser module, and the like.

**210** As described above, the user terminal apparatus 100 may be implemented in various kinds of apparatuses such as a cellular phone, a tablet PC, a laptop PC, a PDA, an MP3 player, an electronic picture frame, a TV, a PC, a kiosk, and the like. Therefore, the configuration described in FIGS. 4 and 5 may be variously modified according to a kind of the user terminal apparatus 100.

211 FIG. 6 is a block diagram of an image forming apparatus according to an embodiment of the present disclosure.

212 Referring to FIG. 6, the image forming apparatus 200 may include a communicator (e.g., a communication interface) 210, a display 220, a user manipulator 230, a storage 240, an image former 250, a scanner 260, a facsimile 270, and a processor 280.

213 The communicator 210 is formed to connect the image forming apparatus 200 to the external device, and may be connected to the external device via a LAN and an Internet network and may also be connected to the external device via a universal serial bus (USB) port and a wireless module. Here, the wireless module may be WiFi, WiFi Direct, NFC, Bluetooth, or the like.

214 In addition, the communicator 210 may receive the printing data from the user terminal apparatus 100 or the cloud server 300. Here, the printing data may be data of a printer language such as PS, PCL, or the like, and in the case in which the image forming apparatus 200 supports the direct printing, the printing data may also be a file itself such as PDF, XPS, BMP, JPG, or the like.

215 In addition, the communicator 210 may provide the position information of the image forming apparatus 200 to the cloud server 300. In addition, the communicator 210 may provide the function information of the image forming apparatus 200 to the cloud server 300. Such function information may include information on a function and an option which are supportable by the image forming apparatus 200, and information about whether or not an error occurs.

216 In addition, the communicator 210 may receive the user information from the user terminal apparatus 100. For example, the communicator 210 may receive information required to certificate the user or information for identifying the printing date requested by the user from the user terminal apparatus 100 using the NFC module.

217 In addition, the communicator 210 may transmit print history information to the cloud server 300. In addition, the communicator 210 may transmit the print result to the user terminal apparatus 100 or the cloud server 300 transmitting the printing command.

218 In addition, the communicator 210 may receive the function execution command from the user terminal apparatus 100. In this case, the communicator 210 may receive option information belonging to the corresponding function together with the function execution command.

219 In addition, the communicator 210 may receive the edition command for the printing data from the user terminal apparatus 100.

220 The display 220 may display a variety of information provided by the image forming apparatus 200. The display 220 may be a display such as a monitor. At the time of implementation, the display 220 may also be implemented as the touch screen capable of performing a function of the user manipulator 230 to be described below, in one.

221 In addition, after the display 220 receives the printing data, the display 220 may display that the user certification is required. In addition, the display 220 may display the user interface window for performing a certification corresponding to received user certification information. For example, if the certification information is a password, the display 220 may display a screen for receiving the password, and if the certification information is NFC information, the display 220 may display guide information for an NFC tag.

222 In addition, the display 220 may display an edition layout that may be performed for the printing data. Here, if the user selects one edition layout, the display 220 may display a preview image for the printing data to which the selected layout is applied.

223 In addition, the display 220 may display a progress process and a progress result of a current task.

224 In addition, the user manipulator 230 includes a plurality of function keys by which the user may set or select a variety of functions supported by the image forming apparatus 200. Such user manipulator 230 may be implemented as a device such as a button, a touch pad, a mouse, or a keyboard, or may also be implemented as the touch screen which may simultaneously perform the function of the above-mentioned display 220.

225 In addition, the user manipulator 230 may receive a function selection command associated with the function of the image forming apparatus, an option command for the corresponding function, and the like.

226 In addition, the user manipulator 230 may select any one of selectable edition layouts. In addition, the user manipulator 230 may receive information (e.g., a password, a user ID, etc.) required to certificate the user.

227 The storage 240 stores the printing data received through the communicator 210. In addition, the storage 240 may store the printing data which is newly generated according to the edition. In addition, the storage 240 may store history information for the task performed by the image forming apparatus 200.

228 The storage 240 may be implemented as a storage medium in the image forming apparatus 200 and an external storage medium, for example, a removable disk including a USB memory, a web server via a network, and the like.

229 The image former 250 prints the printing data on a print paper. For example, the image former 250 may print the received printing data received through the communicator 210 on the print paper in any one of an inkjet scheme, a dot-jet scheme, and a laser printer scheme. In this case, the printing data may be data received through the communicator 210, may be scan data generated by the scanner 260, and may be facsimile data received by the facsimile 270.

230 The scanner 260 scans a manuscript to generate a scan image. For example, the scanner 260 includes a light emitter (not shown) emitting light to the manuscript and a lens (not shown) imaging

light reflected from the manuscript to an internal image sensor, an image sensor, and the like, and reads image information of the manuscript from the light imaged to the image sensor.

231 The scanner 260 may be a device for scanning a manuscript placed on a flatbed, may be a device for scanning a single surface or both surfaces of a manuscript fed by an automatic document feeder (ADF), and may be a combination of both. The scanner 260 may generate a plurality of scan images which are continuously scanned by the ADF as one file.

232 The facsimile 270 includes a facsimile modem connected to a public switched telephone network (PSTN) network. The corresponding modem has a facsimile line having a specific facsimile phone number. Although the present embodiment describes the case in which one facsimile 270 includes only one facsimile modem, the facsimile 270 may also include a plurality of facsimile modems, that is, a plurality of facsimile lines at the time of implementation.

233 The facsimile 270 may convert data into facsimile data. For example, the facsimile 270 may convert the prestored printing data or scan data into a facsimile format (MH/MR/MMR/JBIG/JPEG) suitable for a facsimile transmission standard (T.30 protocol), and may transmit the converted data to another side image forming apparatus via the PSTN network. In this case, the facsimile 270 may merge prestored transmission time interval (TTI) (i.e., transmission side information) into existing printing data or scan data to generate facsimile data. Although FIG. 6 illustrates and describes the case in which the image forming apparatus 200 includes the facsimile, the facsimile may be omitted at the time of implementation.

234 In addition, the facsimile 270 may receive the facsimile data via the PSTN network, may transmit the received facsimile data to the image former 250 to print the facsimile data, or to store the facsimile data in the storage 240.

235 The processor 280 controls the respective components in the image forming apparatus 200. For example, if the processor 280 receives the printing data from the user terminal apparatus 100, the processor 280 may control the image former 250 so that the received printing data is printed. In addition, if the processor 280 receives the function execution command through the user manipulator 230, the processor 280 may control the image former 250, the scanner 260, and the facsimile 270 so that the received function execution command is performed.

236 In the case in which the operation is performed in the full printing scheme, if the processor 280 receives the printing data and the user information from the user terminal apparatus 100, the processor 280 may store the received printing data and user information in the storage 240. In addition, if the certification information is received through the user manipulator 230, the processor 280 may control the image former 250 so that the printing data corresponding to the received certification information is printed.

237 In this case, the processor 280 may control the display 220 so that a Ul for selecting the edition layout for the received printing data is displayed before performing the print. If the processor 280 selects any one of the displayed layouts from the user, the processor 280 may control the image former 250 so that the received printing data is edited to correspond to the selected layout, and the edited printing data is printed.

**238** For example, if the layout selected by the user is a letterspacing change layout, the processor 280 may modify the printing data so that an interval of the letterspacing within each of the pages configuring the printing data may be expanded or shortened, and may print the modified printing data. For example, if the received data is printing data before a rendering, the processor 280 may perform the rendering according to the received interval of the letterspacing to generate the printing data. If the received data is printing data after the rendering, the processor 280 may perform an image processing increasing the letterspacing of each of the pages using an image edition technology to generate new printing data.

**239** In this case, if the user performs a command increasing the letterspacing, the processor 280 may expand the letterspacing within a range in which one page configuring the printing data is not expanded into two pages.

**240** If the user sets an expansion of the letterspacing of two times by default, but the letterspacing in one page is increased to two times since many texts are included in the page, there may be a case in which a print of one page is impossible. In this case, the processor 280 may reconfigure the page configuring the printing data to generate the printing data. For example, if an edition layout increasing the letterspacing for the printing data of two pages to the two times is selected, the processor 280 may create a new page of 1 with only contents approximately from a top of the printing data of a first page to two-third thereof, may create a new page of 2 with only the printing data configuring the remaining one-third page and content from a top of a next page to one-third thereof, and may create a new page of 3 with only the remaining two-third contents.

**241** If the user selects a layout that discriminately displays a specific phrase, the processor 280 may retrieve the specific phrase within the printing data and perform a preset image processing for the corresponding phrase to allow for the phrase to be printed.

**242** In addition, if the user selects a layout in which only the text is printed, the processor 280 may extract only the text within the printing data and reconfigure the printing data with only the extracted text to perform the print. Alternatively, the processor 280 may perform the print by maintaining the layout of the previously received printing data, but preventing only an image object and a graphic object from being printed.

**243** In addition, if the user selects a layout in which only the image is printed, the processor 280 may extract only the image object within the printing data and generate the printing data with only the extracted image object to perform the print.

**244** The image forming apparatus 200 according to the present embodiment as described above may edit the printing data by selecting only any one of various layouts, thereby making it possible to improve convenience of the user.

**245** Although FIG. 6 illustrates and describes the case in which the image forming apparatus 200 includes all of the image former 250, the scanner 260, and the facsimile 270, the scanner 260 and the facsimile 270 may also be omitted at the time of implementation.

**246** FIG. 7 is a block diagram of a cloud server according to an embodiment of the present disclosure.

**247** Referring to FIG. 7, the cloud server 300 may include a communicator (e.g., a transceiver) 310, a storage 320, and a processor 330.

**248** The communicator 310 is formed to connect the user terminal apparatus 100 to a plurality of image forming apparatuses 200, and may be connected to the image forming apparatuses 200 via a LAN and an Internet network as well as by a wireless communication scheme (e.g., wireless communication such as GSM, UMTS, LTE, or the like).

**249** In addition, the communicator 310 may receive the file from the user terminal apparatus 100. In addition, the communicator 310 may transmit the received file to another file server or a specific mail server in response to the request of the user terminal apparatus 100.

**250** In addition, the communicator 310 may receive the printing data from the user terminal apparatus 100. In addition, the communicator 310 may transmit the received printing data to the image forming apparatus 200 corresponding to the printing data.

**251** In addition, the communicator 310 may receive the user information from the user terminal apparatus 100. Here, the user information is information capable of identifying the user using the user terminal apparatus 100, and as long as it is the information capable of identifying the user with ID of a user, a name of a user, a phone number of a user, or the like, any other information than the above-mentioned examples may be used.

252 In addition, the communicator 310 may receive the request for the file list from the user terminal apparatus 100. This request for the file list may also be separately received, and the reception of the above-mentioned user information may also be treated as the request for the file list.

**253** In addition, the communicator 310 may transmit the file list to the user terminal apparatus 100 in response to the above-mentioned request. Here, the file list, which is a file list corresponding to the user, may include information such as a name, a final modified time, a size, a storage position, a usage history, and the like for each of the files.

**254** In addition, the communicator 310 may receive the function processing command for a specific file from the user terminal apparatus 100. For example, the communicator 310 may request the print processing for the file to a specific image forming apparatus 200, or may be requested to perform an upload of a specific file to the file server and the reservation print for the specific file.

255 In the case in which the above-mentioned function processing command is a printing command for the specific image forming apparatus, the communicator 310 may receive the file or the printing data from the user terminal apparatus 100. In addition, the communicator 310 may transmit the printing data corresponding to the received file to the pre-selected image forming apparatus 200. If the file requested to be printed by the user terminal apparatus is a file stored in another file server (not shown), the communicator 310 may request the corresponding file to another file server (not shown) to perform the above-mentioned operation.

256 In the case in which the function processing command described above is the reservation printing command, the communicator 310 may receive information such as reservation time information, path information, a print option, and the like together with the reservation printing command. Hereinabove, although it is represented that the reservation time information, the path information, and the like are different from the reservation printing command, the reservation time information, the path information, and the option information described above may be included in the reservation printing command.

257 In addition, the communicator 310 may transmit notification information notifying a reservation printing time point to the user terminal apparatus 100. Such notification information may include information notifying that it is a time to print and information (specifically, position information) of the image forming apparatus which is printable during the movement path of the user. The notification of the notification information may also be notification to the user terminal apparatus 100 transmitting the reservation printing command, and may also be notification to another user terminal apparatus designated by the user.

258 In addition, the communicator 310 may transmit an execution command of the reservation printing from the user terminal apparatus 100. Here, the execution command may be the user information capable of identifying the user, or may be identification information corresponding to the reservation printing command which is previously transmitted to the cloud server 300. In this case, the execution command of the reservation printing may include information of the image forming apparatus selected by the user, and in response to this, the communicator 310 may transmit the printing data corresponding to the reservation printing command to the selected image forming apparatus.

259 In addition, the communicator 310 may receive the document edition command form the user terminal apparatus 100. Here, the document edition command is a plurality of file information and layout information among files which are available to the user. In addition, the communicator 310 may provide the preview image for the new file generated according to the above-mentioned document edition command to the user terminal apparatus 100. In addition, the communicator 310 may receive the printing command for the generated new file.

**260** In addition, the communicator 310 may receive the layout modification command before the print from the user terminal apparatus 100 provided with the printing data. In addition, the communicator 310 may provide the printing data modified according to the modification command to the image forming apparatus 200.

**261** The communicator 310 may receive apparatus information and position information of each of the plurality of image forming apparatuses. Here, the apparatus information is information including a function supported by the image forming apparatus and option information of the corresponding function, state information (whether or not error occurs), and the like, and the position information is information on a place at which the image forming apparatus is located.

262 In addition, the communicator 310 may receive a request of transmission of the printing data to be printed from the image forming apparatus 200. For example, in the case in which the image forming system 1000 is operated in the pull printing scheme and the printing data is not stored in the image forming apparatus authenticated by the user, the communicator 310 may receive the request of transmission of the printing data from the corresponding image forming apparatus. In response to the request, in the case in which the communicator 310 stores the printing data therein, the communicator 310 may transmit the stored printing data to the corresponding image forming apparatus. On the other hand, in the case in which the printing data is not stored in the cloud server 300, the communicator 310 may transmit the control command allowing a device having the corresponding printing data stored therein to perform transmission of the corresponding printing data to a device requesting the printing data.

**263** The storage 320 may store the apparatus information and the position information of the image forming apparatus 200. In addition, the storage 320 may store the file or the printing data received from the user terminal apparatus 100.

264 In addition, the storage 320 stores information on a user account. Here, the information on the user account is information including information for certificating the user (e.g., ID and password), or the like.

265 In addition, the storage 320 stores a task history for the corresponding user account.

266 In addition, the storage 320 stores information on an image forming apparatus account. Here, the information on the image forming apparatus account is information including a physical address of the image forming apparatus 200, an account address thereof, and a user account capable of using the corresponding image forming apparatus.

267 In addition, in the case which the cloud server 300 is used as a repository, the storage 320 may store the file of the user. Although the present embodiment describes that the cloud server 300 stores only some files of the user, the cloud server 300 may acquire and integrally store the files stored in several repositories according to the synchronization command at the time of implementation.

268 In addition, the cloud server 300 stores the file information for the file for each of the users. In addition, the cloud server 300 stores the usage history for each of the files. Such file information may include a name, a position, a repository, final modification information, a file size, and the like of a file. In addition, the usage history may include histories such as an uploading, a print, a scan, a facsimile transmission and reception, a transmission, and the like for the file of at least one of the cloud server, the image forming apparatus, the user terminal apparatus, and the file server.

**269** The storage 320 may be implemented as a removable disk including a storage medium in the cloud server 300 and an external storage medium, for example, a USB memory, the file server via a network, and the like.

**270** The processor 330 may control the respective components included in the cloud server 300. For example, the processor 330 may control the communicator 310 so that the position information and the state information of the image forming apparatus 200 are periodically collected.

**271** In addition, the processor 330 may update the usage history such as a file movement for each of the users to the storage 320.

**272** In addition, if the processor 330 receives the request for the file list from the user terminal apparatus 100, the processor 330 may retrieve the file corresponding to the user terminal apparatus 100. For example, the processor 330 may retrieve a file corresponding to a prestored user account from the cloud server 300, the image forming apparatus 200, the user terminal apparatus 100, and the file server (not shown). At the time of implementation, the file list corresponding to the user account is prestored in the storage 320, and the pre-generated file list may be called and used in response to the above-mentioned request.

**273** In addition, the processor 330 may generate an aligned file list for the retrieved files based on the file histories corresponding to the retrieved files. In this case, if at least one of the retrieved files has a plurality of usage histories, the processor 330 may generate a file list including the plurality of usage histories. For example, the processor 330 may align the files in a time sequence based on the usage history for each of the plurality of files, and may generate the file list having the plurality of histories for the file with a sub-item for at least one file.

**274** If the file corresponding to the user is stored in the plurality of repositories, the processor 330 may generate a plurality of file lists described above for each of the repositories. At the time of implementation, even in the case in which the file is stored in the plurality of repositories, the processor 330 may generate one file list, and may also generate a file list (i.e., a file list including repository information for the file) which is separable for each of the repositories.

275 In addition, the processor 330 may control the communicator 310 so that the generated file list is transmitted to the user terminal apparatus 100.

276 In addition, if the processor 330 receives the reservation printing command from the user terminal apparatus 100, the processor 330 may store path information, reservation time information, and target file information that correspond to the received reservation printing command in the storage 320.

277 In addition, at a time point corresponding to the reservation time information, the processor 330 may control the communicator 310 so that the notification information is notified to the user terminal apparatus 100. Such notification information may include only information that the reservation time has come, and may also include information on the image forming apparatus available to the user terminal apparatus on the movement path. At the time of implementation, the notification information may transmit only the information that the reservation time has come, and may also provide information on the available image forming apparatus to the user terminal apparatus 100 when current position information is received from the user terminal apparatus 100.

**278** The processor 330 may retrieve the image forming apparatus which is available on the movement path of the user based on the pre-received movement path information. For example, the processor 330 may calculate the movement path based on the destination and a current position or a past position of the user terminal apparatus 100, and may primarily retrieve the image forming apparatus which is available to the user on the movement path. For example, the processor 330 may calculate the movement path of the user such as sidewalk navigation or vehicle navigation, and may retrieve the image forming apparatus which is available within a preset distance on the corresponding movement path.

279 In addition, the processor 330 may retrieve only the image forming apparatus corresponding to the option information using the prestored option information. For example, in the case in which the option information includes a color printing, the processor 330 may retrieve only the image forming apparatus which may perform the color printing on the movement path. Alternatively, the processor 330 may also select one image forming apparatus having the lowest printing cost among the image forming apparatuses which may perform the color printing based on the printing cost. In the case in which the image forming apparatus is not retrieved during the above-mentioned processes, the processor 330 may repeat the above-mentioned retrieval process by expanding the preset distance in the previous process.

**280** In addition, the processor 330 may transmit information on the retrieved image forming apparatus to the user terminal apparatus 100.

**281** In addition, if the processor 330 receives the information on the image forming apparatus to perform the printing task from the user terminal apparatus 100, the processor 330 may control the communicator 110 so that the printing data is transmitted to the corresponding image forming apparatus. At the time of implementation, in the case in which the image forming system 1000 is operated in the full printing scheme, the processor 330 is requested to transmit the printing data from the image forming apparatus 200, the processor 330 may also transmit the printing data to the image forming apparatus 200 requesting the transmission of the printing data.

282 In addition, the processor 330 may generate a new file according to the document edition command of the user. For example, if the processor 330 receives a selection command selecting a plurality of files and template information, the processor 330 may dispose the plurality of selected files in a layout corresponding to the template information to generate the new file. In addition, the processor 330 may transmit the preview image for the new file to the user terminal apparatus 100, and if the processor 330 receives a confirmation command from the user terminal apparatus 100, the processor 330 may generate the printing data for the new file and transmit the printing data to the image forming apparatus 200. If the processor 330 receives the modification command from the user terminal apparatus 100, the processor 330 may edit a layout of the new file according to the modification command to repeat the above-mentioned operation.

283 In addition, if the processor 330 receives a layout modification command for the printing data received before performing the print, the processor 330 may edit the received printing data so as to correspond to the modification command and may transmit the edited printing data to the image forming apparatus 200.

284 For example, if the layout selected by the user is a letterspacing change layout, the processor 330 may modify the printing data so that an interval of the letterspacing within each of the pages configuring the printing data may be expanded or shortened, and may print the modified printing data. For example, if the received data is the file itself, the processor 330 may perform the rendering according to the received interval of the letterspacing to generate the printing data. If the received data is printing data after the rendering, the processor 330 may perform an image processing increasing the letterspacing of each of the pages using an image edition technology to generate new printing data.

285 In this case, if the user performs a command increasing the letterspacing, the processor 330 may expand the letterspacing within a range in which one page configuring the printing data is not expanded into two pages.

286 If the user sets a double letterspacing by default and increases a letterspacing of one page to two times, which causes a print of one page to be impossible, the processor 330 may reconfigure the page configuring the printing data to generate new printing data. For example, if an edition layout increasing the letterspacing for the printing data of two pages to the two times is selected, the processor 330 may create a new page of 1 with only contents approximately from a top of the printing data of a first page to two-third thereof, may create a new page of 2 with only the printing data configuring the remaining one-third page and content from a top of a next page to one-third thereof, and may create a new page of 3 with only the remaining two-third contents.

287 If the user selects a layout that discriminately displays a specific phrase, the processor 330 may retrieve the specific phrase within the printing data and perform a preset image processing for the corresponding phrase to modify the printing data.

288 In addition, if the user selects a layout in which only the text is printed, the processor 330 may extract only the text within the printing data and reconfigure the printing data with only the extracted text to transmit the reconfigured printing data to the image forming apparatus 200.

289 Alternatively, the processor 330 may transmit the printing data to the image forming apparatus 200 together with the printing command that maintains the layout of the previously received printing data, but prevents only an image object and a graphic object from being printed.

**290** In addition, if the user selects a layout in which only the image is printed, the processor 330 may extract only the image object within the printing data and generate the printing data with only the extracted image object to transmit the printing data to the image forming apparatus 200.

**291** As described above, the cloud server 300 according to the present embodiment may provide the file list that may be retrieved with a behavior of the user related to the corresponding file as well as the title, the storing place, and the keyword which are directly related to the file to the user terminal apparatus, thereby making it possible to improve convenience of the user.

**292** In addition, the cloud server 300 according to the present embodiment supports the reservation printing, thereby making it possible to perform the printing task at a time point requested by the user. In addition, the information of the image forming apparatus is provided by considering the movement path of the user, and accordingly, the printing task may be performed, thereby making it possible for the user to easily perform the printing task on the movement path.

**293** In addition, the cloud server 300 according to the present embodiment may edit the printing data by selecting only any one of various layouts even after transmitting the printing data, thereby making it possible to improve convenience of the user.

**294** Hereinabove, although only simple configurations configuring the cloud server have been illustrated and described, at the time of implementation, various configurations may be additionally included. This will be described below with reference to FIG. 8.

**295** FIG. 8 is a block diagram of a cloud server according to an embodiment of the present disclosure.

**296** Referring to FIG. 8, the cloud server 300 may include the communicator 310, the storage 320, the processor 330, a display 340, a manipulation input unit (e.g., user manipulator) 350, and an account manager 360.

**297** Since the operations of the communicator 310, the storage 320, and the processor 330 have been described above with reference to FIG. 7, an overlapped description will be omitted.

298 The display 340 may display a variety of information provided by the cloud server 300. The display 340 may be a display such as a monitor. At the time of implementation, the display 340 may also be implemented as the touch screen capable of performing a function of the manipulation input unit 350 to be described below.

299 In addition, the manipulation input unit 350 includes a plurality of function keys by which the user may set or select a variety of functions supported by the cloud server 300. Such manipulation input unit 350 may be implemented as a device such as a button, a touch pad, a mouth, or a keyboard, or may also be implemented as the touch screen which may simultaneously perform the function of the above-mentioned display 340.

300 The account manager 360 manages a file corresponding to a user account. In this case, the account manager 360 may also manage the file stored in the cloud server 300 as well as a state of the file stored in the file server (not shown). In this case, the account manager 360 may simultaneously manage the usage history information on each file. In addition, the account manager 360 may store all files stored in other repositories in the cloud server 300 according to the synchronization command of the user.

301 The account manager 360 manages position information and state information on each of connectable image forming apparatuses 200.

302 The account manager 360 may retrieve the image forming apparatus which is available on the movement path of the user based on the path information received from the user terminal apparatus 100 and the prestored position information.

303 The account manager 360 performs a management for the user account. For example, if the certification request is received from the image forming apparatus 200 based on the information on the user account prestored in the storage 320, the account manager 360 may perform certification based on the information included in the received certification request and may inform the result of the corresponding image forming apparatus.

304 As described above, the cloud server 300 according to the present embodiment may provide the file list that may be retrieved with a behavior of the user related to the corresponding file as well as the title, the storing place, and the keyword which are directly related to the file to the user terminal apparatus, thereby making it possible to improve convenience of the user.

305 In addition, the cloud server 300 according to the present embodiment supports the reservation printing, thereby making it possible to perform the printing task at a time point requested by the user. In addition, the information of the image forming apparatus is provided by considering the movement path of the user, and accordingly, the printing task may be performed, thereby making it possible for the user to easily perform the printing task on the movement path.

**306** Although FIG. 8 illustrates and describes the case in which the cloud server 300 performs a function as a certification server and also performs a function as a storage server, the certification function and the storage function may also be performed in another server at the time of implementation.

307 FIG. 9 is a diagram of a storage and an operation of generating a file list based on a behavior according to an embodiment of the present disclosure.

**308** Referring to FIG. 9, the cloud server 300 may include the storage 320 and the processor 330.

309 The storage 320 may include a first repository 321 storing a file and a second repository 323 storing a history of the file.

310 The first repository 321 may store the files transmitted by the user from the user terminal apparatus 100 to the cloud server 300.

311 The user may transmit the file to other file servers as well as the cloud server 300. In this case, the cloud server 300 may store account information of another file server for each of the users, and periodically manage file information for each of the users. Such file information for each of the users may be stored in the first repository 321. In addition, at the time of implementation, all files stored in other repositories may also be periodically stored in the first repository 321.

312 The second repository 323 stores usage history information on a plurality of files for each of the users. In addition, the second repository 323 may store information corresponding to the reservation printing command received from the user terminal apparatus 100. Here, the stored information may include the file or the printing data, which is the print target, the reservation time information, the path information, and the like.

313 If the processor 330 receives the user information, the processor 330 may retrieve the user file corresponding to the user information from the first internal repository 321 and an external file server (not shown). In addition, the user file list which is generated accordingly may be stored in the first repository 321. Here, the user information may include information capable of identifying the user, and identification and password information for accessing other file server. Here, the received information, which is the user information, may be stored in the storage 320.

314 In addition, the processor 330 may provide a Ul corresponding to the generated file list to the user terminal apparatus 100. In this case, the provided Ul may be classified into a Past Q section and a current Q section as illustrated in FIG. 9. The Past Q section is a Ul section that provides a file list for a file having a printing history, a file having a scan history, a file uploaded to a specific system, a file uploaded to E-mail and another cloud server, and the like.

315 In addition, the current Q section is a Ul section that provides a file list for a file to be printed, a file which is recently used, a file which is recently uploaded to a specific system, and the like.

316 If the processor 330 receives the request for the file list from the user terminal apparatus 100, the processor 330 may transmit the user file list which is pre-generated to the user terminal apparatus 100. An example of such file list will be described below with reference to FIG. 10.

**317** FIG. 10 is a diagram of a usage history according to an embodiment of the present disclosure.

318 Referring to FIG. 10, each of a file name, a file kind, a use form, a use place, a use time point, and additional information is configured in a lookup table for the plurality of files corresponding to the user account. Here, the additional information, which is a worker, a sharer, importance, a keyword, and the like, may be directly input by the user, or may also be automatically input when information corresponding to the above-mentioned examples exists.

319 One file may have a plurality of usage histories, and the example of FIG. 10 includes a history in which a file name of "xxxxxx" is printed, and a history in which the file name of "xxxxxx" is uploaded to another file server (blackboard).

320 In addition, if the user performs a specific function such as uploading or printing the file, the processor 330 may update the history information in the form illustrated in FIG. 10.

321 In addition, if it is required to provide the file list to the user terminal apparatus, the processor 330 may load the lookup table corresponding to the user, and may accordingly provide the file list to the user terminal apparatus 100.

322 FIG. 11 is a diagram of a user interface window to which a retrieval range of the file based on the behavior is set according to an embodiment of the present disclosure.

323 Referring to FIG. 11, the user interface window 1100 includes a scheme region 1110 in which a synchronization scheme is set, and a target region 1120 in which a synchronization target is set.

324 The scheme region 1110 is a region in which any one of an automatic scheme and a manual scheme is selected. Here, the automatic scheme is a scheme that acquires the file information of the user from the file servers corresponding to the synchronization target below periodically or automatically at a preset time point to generate the file list. The manual scheme is a scheme that acquires the file information of the user from the file servers corresponding to the synchronization target to generate the file list, when the user separately inputs the synchronization command.

325 The target region 1120 is a region in which a repository that is a target of the file list is selected. For example, in the illustrated example, since the user operates three external file servers, three selection regions exist, but such selection regions may correspond to the user account information on the external file server which is pre-input by the user.

326 Here, the displayed repository may be all devices, storages, clouds, LMSs, websites, e-mail servers, and the like having a history logged in with a designated user ID.

327 FIG. 12 is a flowchart of an operation of a case in which the reservation printing command is input to the cloud server according to an embodiment of the present disclosure.

328 Referring to FIG. 12, reservation time information is confirmed from the pre-received reservation printing command at operation S1205.

329 By comparing the confirmed reservation time information with a current time, it is determined whether or not the image forming apparatus needs to be retrieved at operation S1210. Here, the comparison method may be varied depending on a kind of the reservation time input by the user. For example, in the case in which the user sets a movement start time as the reservation time, the retrieval may be performed when the current time becomes the movement start time. In the case in which user sets a time arriving at a final destination as the reservation time, it is determined whether or not the image forming apparatus is retrieved by comparing a time obtained by subtracting a movement time and a print required time from the set time with the current time.

330 If it is determined that the retrieval is required, information on the user terminal apparatus and information on a printer are collected at operation S1215. For example, it is possible to confirm a kind of the user terminal apparatus, whether or not there is a printer which is frequently used by the user, a current position of the user terminal apparatus, status (e.g., whether or not error occurs, status of supplies, whether or not it is turned on, and the number of tasks which are currently being performed) of each of the image forming apparatuses which are connectable with the cloud server 300, printing cost of each of the image forming apparatuses, a support function, and the like.

331 If the information collection is completed, the image forming apparatus which is available on the movement path is retrieved at operation S1220. For example, the movement path of the user may be determined based on current position information of the user terminal apparatus and destination information included in the reservation printing command, and the image forming apparatus which is positioned within a preset range within the corresponding movement path may be primarily retrieved. In addition, an apparatus having a failure or error among the retrieved image forming apparatuses may be primarily filtered, and the image forming apparatus that may not perform the printing option set by the user may be secondly filtered. Here, at the time of implementation, an order of the primary and secondary filtering may be changed.

332 An optimal image forming apparatus among the retrieved image forming apparatuses may be selected at operation S1225. For example, in the case in which the plurality of image forming apparatuses are retrieved in the previous process, the image forming apparatus which is disposed closest to the movement path may be selected, the image forming apparatus having the smallest task amount which is being performed may be selected, or the image forming apparatus having the smallest printing cost may be selected. At the time of implementation, one image forming apparatus may also be selected based on a plurality of criteria by applying weight to the above-mentioned items.

333 If the image forming apparatus is selected, the notification information may be notified to the user terminal apparatus at operation S1230. Here, the notification information may include information that the printing reservation time has come and information on the selected image forming apparatus.

334 Although FIG. 12 describes that one image forming apparatus is finally selected and the notification information is provided to the user terminal apparatus, at the time of implementation, a plurality of image forming apparatuses may be selected, and information on the plurality of image forming apparatuses may also be provided to the user terminal apparatus 100 as the notification information.

**335** FIG. 13 is a sequence diagram of an operation of displaying a file list based on a behavior according to an embodiment of the present disclosure.

**336** Referring to FIG. 13, first, the user terminal apparatus 100 receives the synchronization target set by the user at operation S1305. For example, the user terminal apparatus 100 may set a range of the file servers to be retrieved, and may receive log-in information on each file server, if necessary. If the log-in information on each file server is prestored, the above-mentioned reception operation may be omitted.

337 In addition, the user terminal apparatus 100 may provide information on the synchronization target to the cloud server 300 at operation S1310. In addition, the user terminal apparatus may provide the log-in information to the file server 10 (or the external source) at operation S1315.

338 The cloud server 300 receiving the information on the synchronization target may transmit a file synchronization request to the file server 10 at operation S1320, and may receive the file information of the user in response to the file synchronization request at operation S1325.

339 The cloud server 300 receiving the file information may analyze the file and history corresponding to the user at operation S1330, and may classify and align the files according to the usage history and the repository position to generate the file list at operation S1335. Here, the file list may also include information according to the printing reservation command of the user.

**340** The generated file list may be provided to the user terminal apparatus 100 at operation S1340, and the user terminal apparatus 100 receiving the file list may display the received file list at operation S1345. In this case, the user terminal apparatus 100 may display the received file list in a different scheme according to a tab selected by the user. For example, in the case in which the user selects the past Q, the user terminal apparatus 100 may align and display the files in the order of a time of the usage history in the received file list. In the case in which the user selects the current Q, the user terminal apparatus 100 may separately display the list of files stored in each of the repositories. This example will be described below with reference to FIGS. 15, 16, and 17.

**341** If the user selects any one file from the displayed file list at operation S1350, the user terminal apparatus 100 may transmit a preview image request of the selected file to the cloud server 300 at operation S1355, and may receive and display the preview image in response to the above-mentioned request at operation S1360. Hereinabove, although it is described that the user terminal apparatus requests the preview image, at the time of implementation, the user terminal apparatus may request the transmission of the file and may receive and display the file in response to the above-mentioned request.

**342** FIG. 14 is a sequence diagram of an operation of displaying a file list based on a behavior according to an embodiment of the present disclosure.

343 Referring to FIG. 14, first, the user terminal apparatus 100 receives the synchronization target set by the user at operation S1405. For example, the user terminal apparatus 100 may set a range of the file servers to be retrieved, and may receive log-in information on each file server, if necessary. If the log-in information on each file server is prestored, the above-mentioned reception operation may be omitted.

**344** In addition, the user terminal apparatus 100 may provide information on the synchronization target to the cloud server 300 at operation S1410. In addition, the user terminal apparatus may provide the log-in information to the file server 10 (or the external source) at operation S1415.

**345** The cloud server 300 receiving the information on the synchronization target may transmit a file synchronization request to the file server 10 at operation S1420, and may receive the file information of the user in response to the file synchronization request at operation S1425 at operation.

**346** The cloud server 300 receiving the file information may analyze the file and history corresponding to the user at operation S1430, and may classify and align the files according to the usage history and the repository position to generate the file list at operation S1435. Here, the file list may also include information according to the printing reservation command of the user.

**347** The generated file list may be provided to the user terminal apparatus 100 at operation S1440, and the user terminal apparatus 100 receiving the file list may display the received file list at operation S1445. In this case, the user terminal apparatus 100 may display the received file list in a different scheme according to the scheme selected by the user. For example, in the case in which the user selects the past Q, the user terminal apparatus 100 may align and display the files in the order of the usage history in the received file list. In the case in which the user selects the current Q, the user terminal apparatus 100 may separately display the list of files stored in each of the repositories. This example will be described below with reference to FIGS. 15, 16, and 17.

**348** If the user selects the file stored in the file server 10 in the displayed file list at operation S1450, the user terminal apparatus 100 may request the cloud server 300 to transmit the selected file. At the time of implementation, the user terminal apparatus 100 may transmit the request of the preview image of the selected file to the cloud server 300, and the cloud server 300 may also request the file server 10 to transmit the selected file at operation S1455.

**349** If the cloud server 300 receives the file in response to such request at operation S1460, the cloud server 300 may generate a preview image for the received file and provide the generated preview image to the user terminal apparatus 100 at operation S1465. At the time of implementation, the file itself, not the preview image, may be provided to the user terminal apparatus 100, and the user terminal apparatus 100 may also directly receive the file from the file server 10, without passing through the cloud server 300 in the middle.

350 FIGS. 15, 16, 17, 18, and 19 are diagrams illustrating examples of a user interface window which is displayable on the user terminal apparatus of FIG. 1 according to an embodiment of the present disclosure.

351 For example, FIG. 15 illustrates an example of the user interface window which is displayable in the case in which the user terminal apparatus 100 drives a document management program according to an embodiment of the present disclosure.

352 Referring to FIG. 15, the user interface window 1500 includes a display region 1510 of the user information, a current task tab 1520, a past task tab 1530, a setting tab 1540, and file list display regions 1521, 1523, and 1525.

353 The display region 1510 of the user information is a region displaying information of a current user.

354 The current task tab 1520 is a region receiving a selection command allowing a list of files managed by the user to be displayed. Since the file list corresponding to the current task tab 1520 is displayed, the current task tab 1520 may have a form (specifically, color, shape, size) different from other tabs so as to display that it is currently selected.

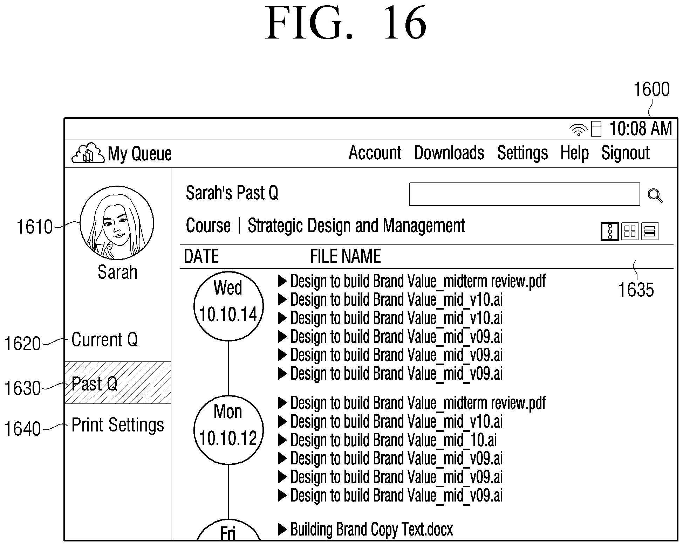

355 The past task tab 1530 is a region receiving a selection command allowing a list of files according to the user history to be displayed. In the case in which such past task tab 1530 is selected, a user interface window (e.g., 1600 as illustrated in FIG. 16) may be displayed.

356 The setting tab 1540 is a region receiving a selection command allowing a setting screen for receiving the synchronization target, the synchronization scheme, and user information on each file server to be displayed. In the case in which the user selects the setting tab 1540, the user interface window as illustrated in FIG. 11 may be displayed.

357 The file list display regions 1521, 1523, and 1525 are regions that separately display the file list received from the cloud server 300 for each of the repositories. For example, in the case of the Past Q, the file list display regions 1521, 1523 and 1525 display the file list classified based on a past behavior attribute. More specifically, the file list display regions 1521, 1523 and 1525 may display the file used up to a preset time from a synchronization time point. For example, the file list display regions 1521, 1523 and 1525 may list-up the file according to a detail time and a file use form through a retrieval of a necessary material keyword for each of semester/subject. Here, in the case in which the user selects any one of the displayed files, the selected file may be transmitted to the current Q.

358 A first file list display region 1521 is a region displaying a file which is recently used by the user.

359 A second file list display region 1523 is a region displaying a file to be printed.

360 A third file list display region 1525 is a region displaying a file belonging to other designated system/specific category.

361 Although the illustrated example illustrates three file list display regions, at the time of implementation, one to two file list display regions may be displayed, and four or more file lists may be separately displayed.

**362** FIG. 16 illustrates an example of a user interface window which is displayable in the case in which the past task tab 1530 of FIG. 15 is selected according to an embodiment of the present disclosure.

363 Referring to FIG. 16, the user interface window 1600 includes a display region 1610 of the user information, a current task tab 1620, a past task tab 1630, a setting tab 1640, and a file list display region 1635.

364 The display region 1610 of the user information is a region displaying information of a current user.

365 The current task tab 1620 is a region receiving a selection command allowing a list of files managed by the user to be displayed. In the case in which the user selects the current task tab 1620, the user interface window as illustrated in FIG. 15 may be displayed.

366 The past task tab 1630 is a region receiving a selection command allowing a list of files according to the user history to be displayed. Since the file list associated with the past task is currently displayed, the past task tab 1630 may have a form (specifically, color, shape, size) different from other tabs so as to display that it is currently selected.

367 The setting tab 1640 is a region receiving a selection command allowing a setting screen for receiving the synchronization target, the synchronization scheme, and user information on each file server to be displayed. In the case in which the user selects the setting tab 1640, the user interface window as illustrated in FIG. 11 may be displayed.

368 The file list display region 1635 may display the file in a list form in the order of a time of the usage history based on the usage history of the file in the received file list. For example, in the case of the current Q, the file list display region 1635 displays the file list classified based on a current/future behavior attribute.

369 More specifically, the file list display region 1635 may display files used by the user between a time preset from the synchronization time point and the synchronization time point, and files which are not yet used (e.g., files which are registered with a designated server by others, but are not yet read by the user).

370 In this case, the file list display region 1635 may separately display a recently used document, a document to be printed, and another user designated category document (e.g., an LMS post document). In addition, in the case in which the user does not yet read a new file registered by others when displaying the file, the file list display region 1635 may display the new file to be distinguished from other files, that is, discriminately. The file which is older than the preset time among the list displayed in the current Q may be deleted from the current Q, and may be transmitted to the past Q.

371 As illustrated, the file list display region 1635 may display the list of the plurality of files to be distinguished in a unit of day.

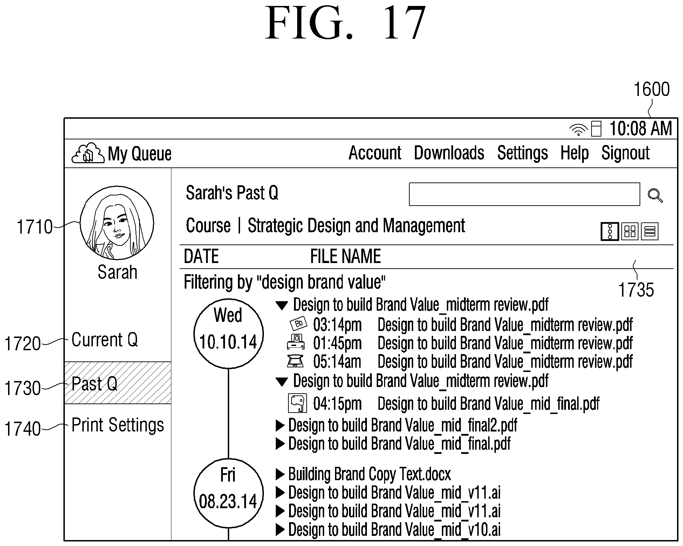

372 In the case in which the user selects the file displayed on the file list display region 1635, the user interface window as illustrated in FIG. 17 may be displayed.

373 FIG. 17 illustrates an example of a user interface window which is displayable in the case in which the user selects one file on the file list of FIG. 16 according to an embodiment of the present disclosure.

374 Referring to FIG. 17, the user interface window 1600 includes a display region 1710 of the user information, a current task tab 1720, a past task tab 1730, a setting tab 1740, and a file list display region 1735.

375 The display region 1710 of the user information is a region displaying information of a current user.

376 The current task tab 1720 is a region receiving a selection command allowing a list of files managed by the user to be displayed. In the case in which the user selects the current task tab 1720, the user interface window as illustrated in FIG. 15 may be displayed.

377 The past task tab 1730 is a region receiving a selection command allowing a list of files according to the user history to be displayed. Since the file list associated with the past task is currently displayed, the past task tab 1730 may have a form (specifically, color, shape, size) different from other tabs so as to display that it is currently selected.

378 The setting tab 1740 is a region receiving a selection command allowing a setting screen for receiving the synchronization target, the synchronization scheme, and user information on each file server to be displayed. In the case in which the user selects the setting tab 1740, the user interface window as illustrated in FIG. 11 may be displayed.

379 The file list display region 1735 may display the file in a list form in the order of a time of the usage history based on the usage history of the file in the received file list. Since the user selects any one of the displayed files, the file list display region 1735 may display a plurality of histories for the corresponding file as sub-items.

380 Accordingly, the user may easily confirm the file history even if the user does not individually find the plurality of usage histories for one file.

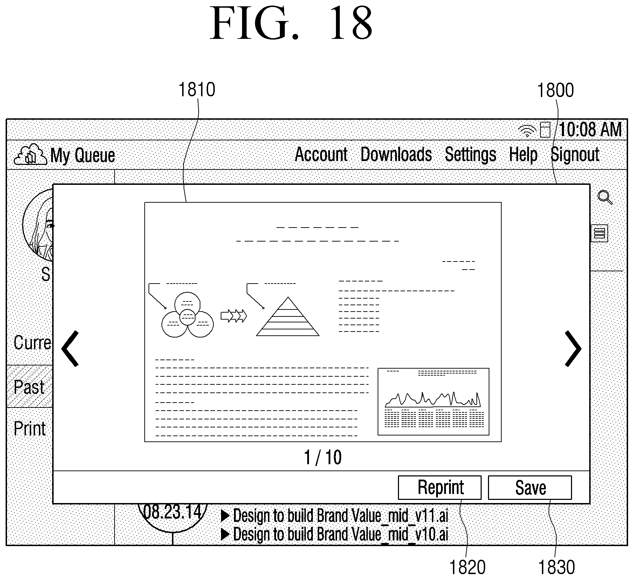

381 FIG. 18 illustrates an example of a user interface window which is displayable in the case in which the user selects one of the files illustrated in FIG. 17 according to an embodiment of the present disclosure.

382 Referring to FIG. 18, the user interface window 1800 includes a preview region 1810, a reprint command input region 1820, and a save region 1830.

383 The preview region 1810 is a region displaying a preview image for the selected file. Such preview image may be displayed by acquiring the file from the cloud server 300 by the user terminal apparatus, and may also be implemented in a form in which the preview image generated by the cloud server 300 is received and is displayed.

384 The reprint command input region 1820 is a region receiving a reprint command for the file on which the preview image is currently displayed. In the case in which the user selects the corresponding region, the printing data for the corresponding file may be transmitted to the image forming apparatus which is set by default.

385 The save region 1830 is a region receiving a save to the user terminal apparatus 100 for the file on which the preview image is currently displayed. In the case in which the user selects the corresponding region, the cloud server 300 may transmit the corresponding file to the user terminal apparatus 100.

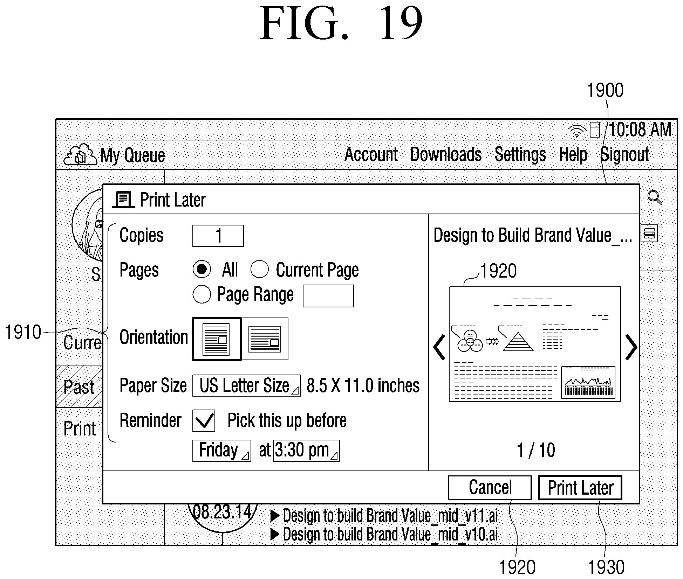

386 FIG. 19 illustrates an example of a user interface window which is displayable in the case in which the reservation printing command is input to one of the files illustrated in FIG. 17.

387 Referring to FIG. 19, the user interface window 1900 includes a printing option setting region 1910, a cancel region 1920, and a printing reservation decision region 1930.

388 The printing option setting region 1910 is a region in which a printing option to be applied to the currently selected file is set.

389 The cancel region 1920 is a region receiving a command canceling the printing reservation command.

390 The printing reservation decision region 1930 is a region performing the printing reservation by the selected printing option. In the case in which the user selects the corresponding region, a Ul for setting the movement path of the user and the reservation time may be displayed.

391 FIGS. 20, 21, 22, and 23 are diagrams of a user interface window displaying various examples of notification information according to an embodiment of the present disclosure.

392 For example, FIG. 20 is a diagram illustrating an example of the notification information displaying the information of the plurality of image forming apparatuses together with the path information according to an embodiment of the present disclosure.

393 Referring to FIG. 20, the user interface window 2000 may include a region 2010 displaying a notification, a region 2020 displaying map information, a region 2025 displaying information of a specific image forming apparatus, a dismiss region 2030, a preview region 2040, and a selection region 2050.

394 The region 2010 displaying the notification is a region displaying information indicating that a time requesting the reservation printing has come.

395 The map region 2020 is a region displaying the position of the image forming apparatus which is available on the movement path of the user together with a map. If the user selects any one of icons of the displayed image forming apparatus, the region 2025 displaying the information of the specific image forming apparatus may be displayed.

396 The region 2025 displaying the information of the specific image forming apparatus, which is a region displaying the information of the image forming apparatus selected by the user in the map region 2020, may display detailed position information of the image forming apparatus, a distance from a current position, predicted printing time information, and the like.

397 The dismiss region 2030 is a region receiving a command dismissing a current notification. If such region is selected, the printing reservation may be cancelled, or a notification operation may be stopped during a preset time or a preset movement distance.

398 The preview region 2040 is a region receiving a command for displaying a preview image of a file to be a target of the reservation printing command. If the preview region 2040 is selected, the preview image of the file to be the target of the reservation printing command may be displayed in a pop-up form.

399 The selection region 2050 is a region receiving a printing command to the image forming apparatus selected in the map region 2020. If such selection region 2050 is selected, the user terminal apparatus 100 may request the printing for the file or the printing data which is pre-transmitted to the image forming apparatus selected by the user in the map region 2020. At the time of implementation, the user terminal apparatus 100 may provide information on the image forming apparatus selected by the user to the cloud server 300.

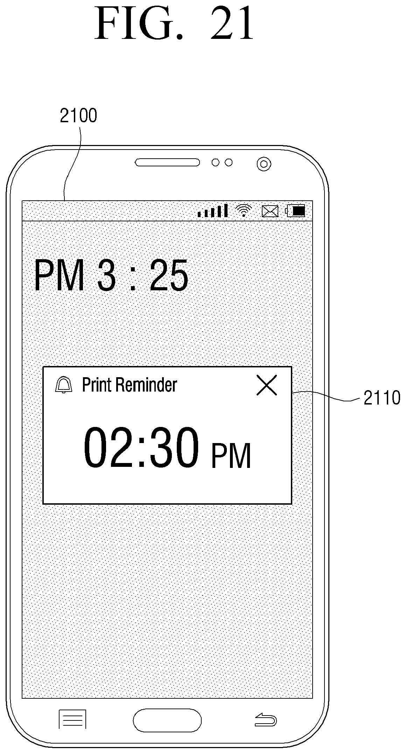

400 FIG. 21 is a diagram of notification information displaying only time information according to an embodiment of the present disclosure.

401 Referring to FIG. 21, the user interface window 2100 includes a display region 2110 of the time information.

402 The display region 2110 of the time information may display that the reservation printing time has currently come.

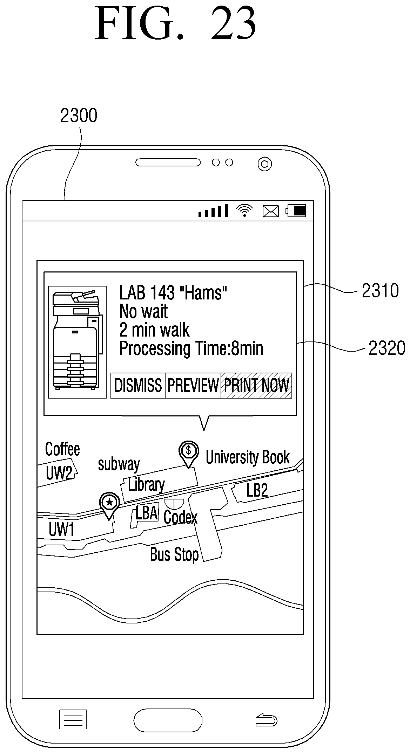

403 In the case in which the user selects the display region 2110 of the time information, a user interface window as illustrated in FIG. 23 may be displayed.

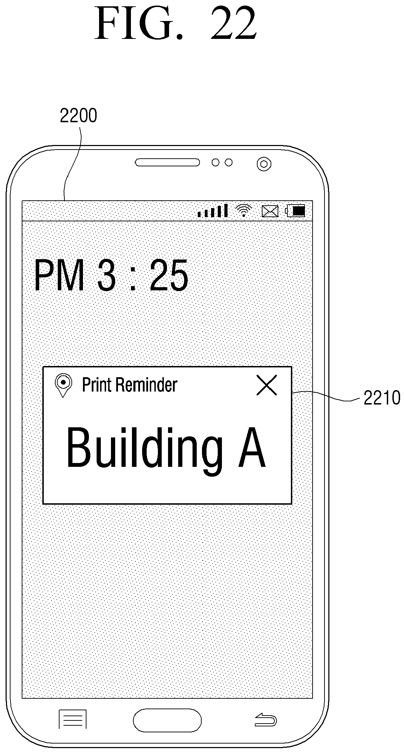

404 FIG. 22 is a diagram of notification information displaying only destination information according to an embodiment of the present disclosure.

405 Referring to FIG. 22, the user interface window 2200 includes a display region 2210 of the destination information.

406 The display region 2210 of the destination information may display a destination input by the user in a process of setting the printing reservation command.

407 In the case in which the user selects the display region 2210 of the destination information, the user interface window as illustrated in FIG. 23 may be displayed.

408 FIG. 23 is a diagram of notification information displaying path information according to an embodiment of the present disclosure.

409 Referring to FIG. 23, the user interface window 2300 displays a map 2310 displaying positions of the plurality of image forming apparatuses which are retrieved on the movement path of the user.

410 If the user selects one of the displayed positions, detailed information 2320 on the corresponding image forming apparatus may be displayed. The user may detect a position, a distance, a time, and the like of the corresponding image forming apparatus based on the displayed detailed information, and may determine whether to perform the printing to the corresponding image forming apparatus.

411 FIGS. 24, 25, 26, and 27 are diagrams of a user interface window which is displayable on the user terminal apparatus in a process of merging the files.

412 For example, FIG. 24 illustrates an example of the user interface window which is displayable in the case in which the user inputs a document merging command25 according to an embodiment of the present disclosure.

413 Referring to FIG. 24, the user interface window 2400 displays examples 2410, 2420, and 2430 of a plurality of templates.

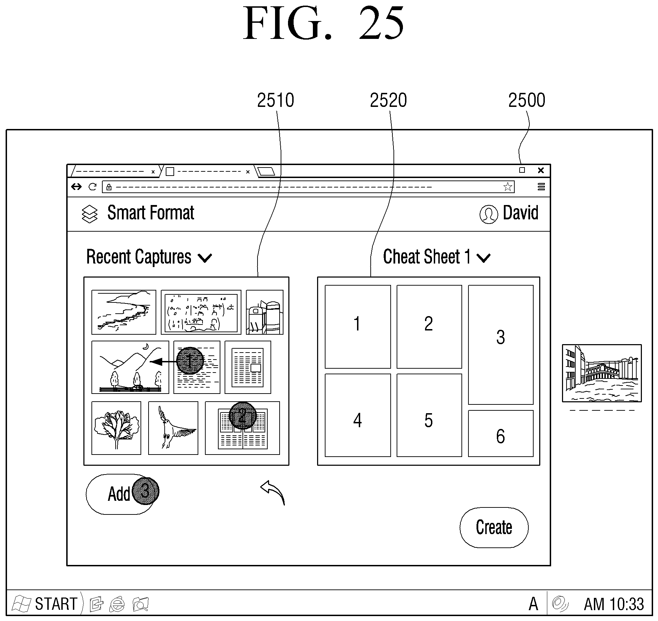

414 The user may select one template to be applied among the displayed examples 2410, 2420, and 2430 of the plurality of templates. If the user selects a second template 2420, a user interface window as illustrated in FIG. 25 may be displayed.

415 Here, a first template 2410 is a region selecting a template merging a document which is mainly based on an image.

416 The second template 2420 is a region selecting a template capable of merging a text and an image in a desired configuration and size.

417 The third template 2430 is a region selecting a template capable of mixing and arranging the text and the image which is mainly based on handwriting contents created in a class time.

418 FIG. 25 is a diagram illustrating an example of a user interface window which is displayable in the case in which the second template of FIG. 24 is selected according to an embodiment of the present disclosure.

419 Referring to FIG. 25, the user interface window 2500 includes a selection region 2510 displaying a list of selectable files and a layout region 2520 displaying a preview image of the selected template.

420 The selection region 2510 is a region displaying the preview image of the file that the user may add to the template. In the case in which a necessary file does not exist in the corresponding region, the user may select 'add' to add the file. Here, the preset number of displayed files may be displayed in the order of the file that the user recently works.

**421** The layout region 2520 is a region displaying a template form which is pre-selected by the user.

**422** Here, the user may select one preview image displayed on the selection region 2510 to place the selected preview image on the layout region 2520 in a drag and drop scheme. The file placed on the specific region in the drag and drop scheme may be automatically image-processed and disposed so as to correspond to a preset image processing option corresponding to the selected template.

**423** In addition, if all regions of the layout are filled by repeating the above-mentioned process, the user may complete the task by selecting a create button.

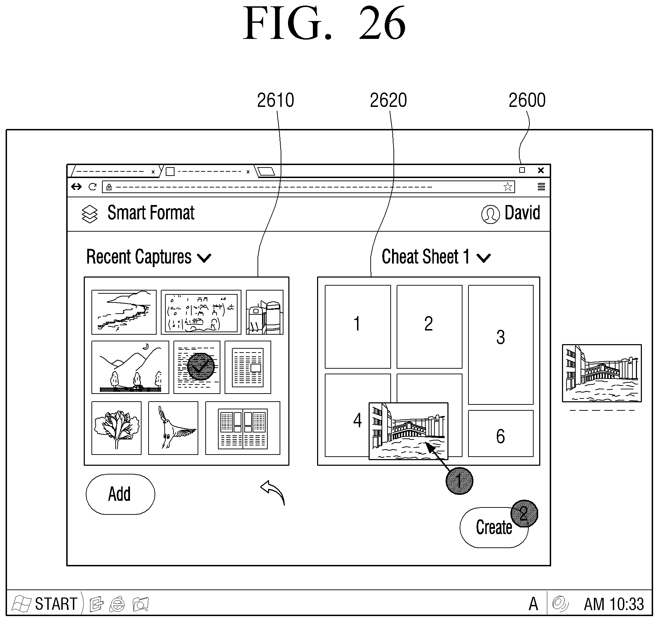

**424** FIG. 26 is an example of a user interface window which may be displayed in the case in which the user selects the create button of FIG. 25 according to an embodiment of the present disclosure.

**425** Referring to FIG. 26, the user interface window 2600 includes a selection region 2610 displaying a list of selectable files and a layout region 2620 displaying a preview image of the selected template.

**426** The layout region 2620 is a region displaying a template form which is pre-selected by the user.

**427** In FIG. 26, an embodiment is illustrated in which the user may select an image and complete the task by selecting the complete button.

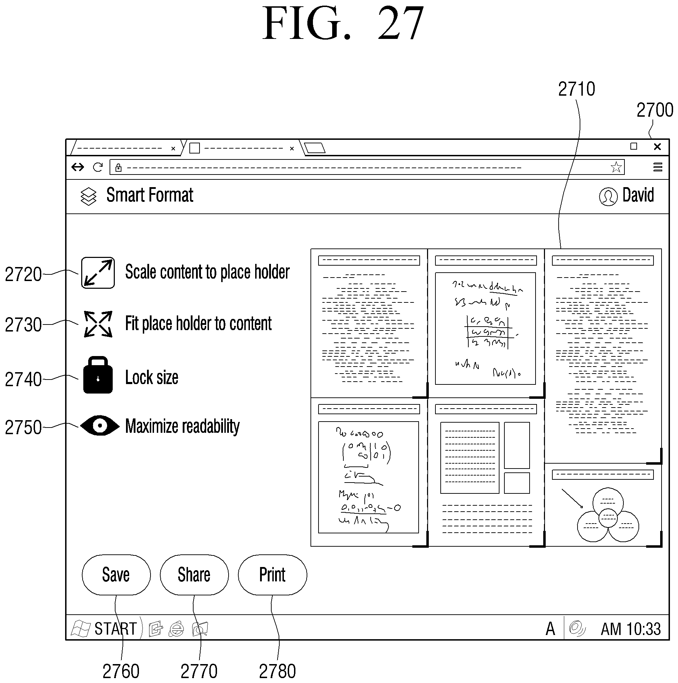

**428** FIG. 27 illustrates an example of the user interface window for editing a document according to an embodiment of the present disclosure.

**429** Referring to FIG. 27, the user interface window 2700 includes a preview region 2710, a plurality of edition tools 2720, 2730, 2740, and 2750, a save region 2760, a share region 2770, and a print region 2780.

430 The preview region 2710 is a region displaying a preview image of a currently merged file.

**431** A first edition tool 2720 is a region selecting a tool changing sizes of a plurality of regions configuring the preview region 2710. The user may select the first edition tool 2720 to change a disposed size of each of the plurality of files configuring the merged image.

**432** A second edition tool 2730 is a region selecting a tool automatically adjusting the files in the preview region 2710. The user may select the second edition tool 2730 to adjust a disposed form of the file in a specific region of the preview region.

433 A third edition tool 2740 is a region selecting a tool fixing a size. The user may select the third edition tool 2740 to fix a size of one of the plurality of regions configuring the template.

**434** A fourth edition tool 2750 is a region selecting a tool performing an image processing increasing readability. The user may select the fourth edition tool 2750 to perform the image processing increasing readability for one region configuring the template.

**435** The save region 2760 is a region receiving a command storing the currently merged file.

436 The share region 2770 is a region receiving a command transmitting the currently merged file to another user. If the user selects the share region 2770, a Ul for selecting another user may be displayed.

**437** The print region 2780 is a region receiving a printing command for the currently merged file. If such print region 2780 is selected, a Ul for selecting an image forming apparatus for performing the printing option and the printing task may be displayed.

**438** FIGS. 28, 29, and 30 are diagrams illustrating examples of the user interface window which is displayable on the image forming apparatus in a process of changing a layout of printing data according to an embodiment of the present disclosure.

**439** For example, FIG. 28 illustrates an example of the user interface window which may be displayed in the case in which the user performs a user certification in the image forming apparatus and inputs the edition command of the printing data according to an embodiment of the present disclosure.

**440** Referring to FIG. 28, the user interface window 2800 includes various selectable layout selection regions 2810, 2820, 2830, and 2840, a customizing region 2850, a print region 2860, and a share region 2870.

**441** A first layout selection region 2810 is a region selecting an edition layout that increases the letterspacing of the printing data to two times.

**442** A second layout selection region 2820 is a region selecting an edition layout that discriminately displays a region including a preset phrase.

**443** A third layout selection region 2830 is a region selecting an edition layout that prints only the text in the printing data.

**444** A fourth layout selection region 2840 is a region selecting an edition layout that prints only the image in the printing data.

**445** The customizing region 2850 is a region for receiving a separate edition command from the user in the case in which an edition is required in a scheme other than the above-mentioned layouts. If the user selects the customizing region 2850, a Ul for receiving a variety of edition commands may be displayed.

**446** The share region 2870 is a region receiving a command sharing current printing data with another user. If the user selects the share region 2870, a Ul for selecting another user may be displayed.

**447** The print region 2880 is a region receiving a command performing a print. In the case in which the print region 2880 is selected without selecting the layout, the printing task may be performed without a separate edition operation.

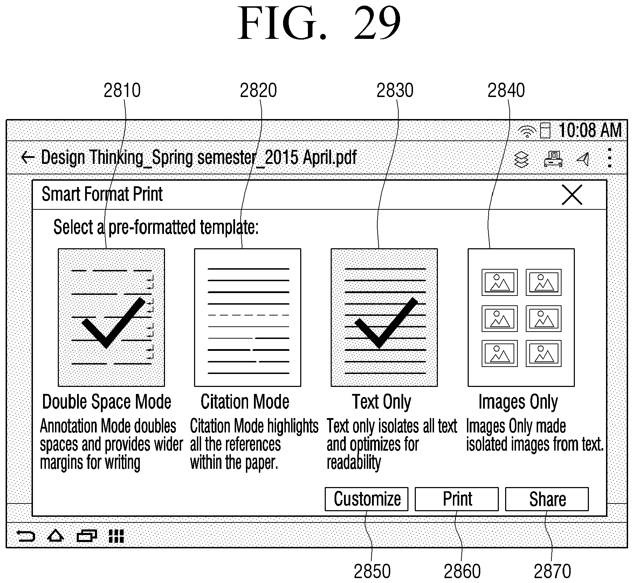

448 In the case in which the user selects the first layout selection region 2810 and the third layout selection region 2830 on the above-mentioned user interface window 2800, a user interface window as illustrated in FIG. 29 may be displayed.

449 FIG. 29 is a diagram illustrating an example of a user interface window which is displayable in the case in which the first layout selection region 2810 and the third layout selection region 2830 of FIG. 28 are selected according to an embodiment of the present disclosure.

450 Referring to FIG. 29, a check is displayed on the first layout selection region 2810 and the third layout selection region 2830 which are selected by the user, which displays that the first layout selection region 2810 and the third layout selection region 2830 are pre-selected.

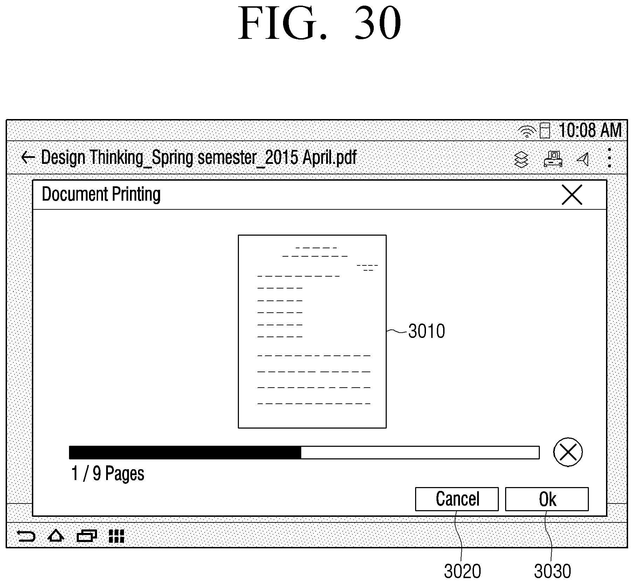

451 In the case in which the print region 2880 is selected in this state, the image forming apparatus may expand the letterspacing for only the text in the printing data to two times to perform the printing task. In addition, a user interface window as illustrated in FIG. 30 may be displayed.

452 FIG. 30 illustrates an example of a user interface window displaying a progress situation of the printing task according to an embodiment of the present disclosure.

453 Referring to FIG. 30, the user interface window includes a region 3010 displaying a preview image, a cancel region 3020, and a confirm region 3030.

454 The region 3010 displaying the preview displays the preview image for the printing data which is currently being worked. In a previous process, since the first layout and the third layout are selected, it may be confirmed that the preview image has the letterspacing which is increased only with respect to the text.

455 The cancel region 3020 is a region receiving a command canceling a current printing task.

456 The confirm region 3030 is a region receiving a command closing a screen which is currently being displayed.

457 Hereinabove, although it is illustrated and described that the edition operation of the printing data is performed in the image forming apparatus, the above-mentioned operation may be performed in the user terminal apparatus. This will be described with reference to FIG. 31.

458 FIG. 31 is a diagram illustrating an example of the user interface window which is displayable on the user terminal apparatus in a process of changing a layout of printing data according to an embodiment of the present disclosure.

459 Referring to FIG. 31, the user interface window 3100 displays various selectable layouts. The user may select the layout to be applied in the displayed user interface window 3100 to input the printing command. In this case, the user terminal apparatus 100 may transmit selected layout information and the printing command to the image forming apparatus 200. Accordingly, the image forming apparatus 200 may edit the pre-received printing data according to the transmitted layout information, and may perform the print with the edited printing data.

**460** FIGS. 32, 33, and 34 are diagrams illustrating examples of the user interface window which is displayable on the user terminal apparatus in a process of synchronizing the files according to an embodiment of the present disclosure.

**461** FIG. 32 illustrates an example of a user interface window which is displayable in the case in which an application program for editing a document is driven according to an embodiment of the present disclosure.

462 Referring to FIG. 32, the user interface window 3200 displays a Ul provided by the application program for editing the document.

**463** In this case, in the case in which the user wants to receive the contents from another user terminal apparatus, a synchronization plug-in may be driven. In this case, a plug-in region 3220 for synchronization is displayed to a right of a document region as illustrated in FIG. 32. Accordingly, another preset user terminal apparatus 3300 and a current user terminal apparatus 100 are in a synchronized state.

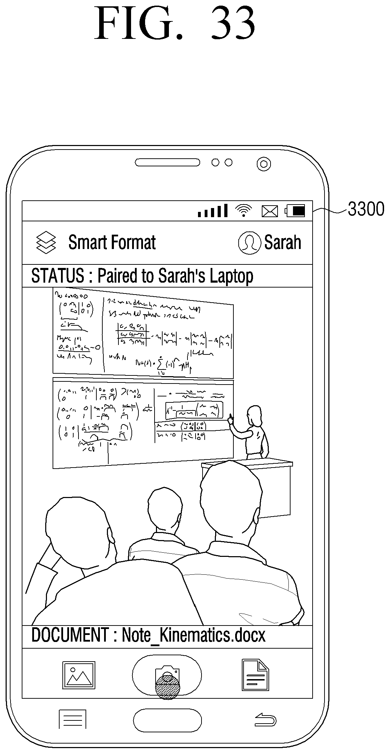

**464** In this case, if another user terminal apparatus 3300 performs an imaging as illustrated in FIG. 33, an imaged image may be transmitted to the user terminal apparatus 100.

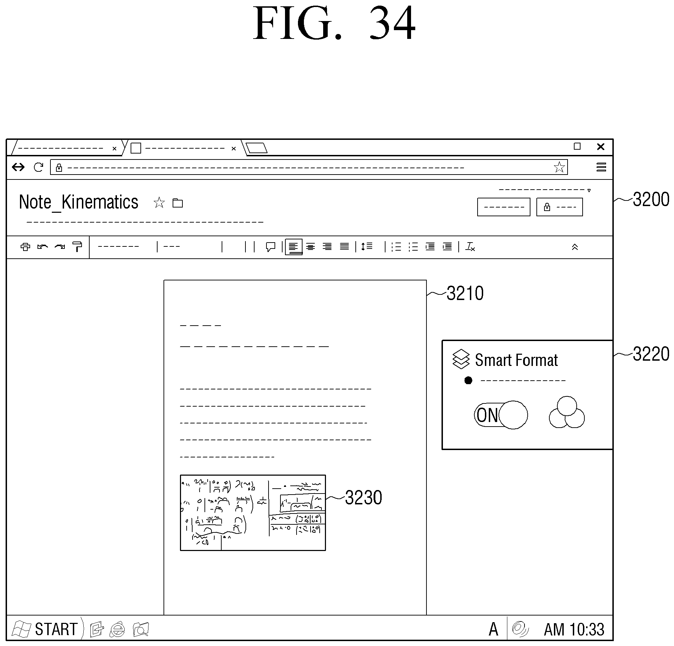

**465** The user terminal apparatus receiving the imaged image may merge the received imaged image to a region in which a cursor is currently positioned, and may display an image 3210 to which the imaged image 3230 is merged, as illustrated in FIG. 34.

**466** In the case in which an option of extracting mathematical expression is set in the synchronization plug-in 3220 in this state, the user terminal apparatus 100 may extract mathematical expression from the received imaged image, and may merge only the extracted mathematical expression to the region in which the cursor is currently positioned.

**467** As described above, according to the present embodiment, the user may acquire and merge the contents of another user terminal apparatus by only driving the plug-in for synchronization.

**468** FIG. 35 is a flowchart of a method for managing a document in a cloud server according to an embodiment of the present disclosure.

**469** Referring to FIG. 35, the cloud server 300 stores file information of a plurality of files for each of the users. In addition, the cloud server 300 stores a usage history of each file at operation S3510. In this case, the usage history for each file may be plural.

**470** The request for the file list is received from the user terminal apparatus 100. Such request may be a direct request for the file list, and may also be a transmission of the user information for connecting the user terminal apparatus 100 to the cloud server 300.

**471** If the request for the file list is received, the file list is generated at operation S3520. For example, the file corresponding to the user terminal apparatus requesting the file list is retrieved. Such retrieval may be performed in advance to be prestored in the cloud server 300. In addition, an aligned file list for the retrieved files may be generated based on the usage histories corresponding to the retrieved files. In this case, if at least one of the retrieved files has a plurality of usage histories, a file list including the plurality of usage histories may be generated.

**472** In addition, the generated file list is transmitted to the user terminal apparatus 100 transmitting the request for the file list at operation S3530.

**473** As described above, the method for managing a document in a cloud server according to the present embodiment may provide the file list including the usage history to the user terminal apparatus, and retrieve the file with a behavior of the user related to the corresponding file as well as the title, the storing place, and the keyword which are directly related to the file, thereby making it possible to improve convenience of the user. The method for managing a document in a cloud server as illustrated in FIG. 35 may be executed on the cloud server having the configuration as illustrated in FIG. 7 or 8, and may also be executed on a cloud server having other configurations.

**474** In addition, the method for managing a document in a cloud server as described above may be implemented in a program (or an application) including an executable algorithm which may be executed on a computer, and the above-mentioned program may be stored and provided in a non-transitory computer readable medium.

**475** The non-transitory computer readable medium does not mean a medium storing data for a short period such as a register, a cache, a memory, or the like, but means a machine readable medium that semi-permanently stores the data. For example, various applications or programs described above may be provided to be stored in the non-transitory computer readable medium such as a compact disc (CD), a digital versatile disc (DVD), a hard disk, a Blu-ray disc, a USB, a memory card, a ROM, or the like.

**476** FIG. 36 is a flowchart of a reservation printing method in a cloud server according to an embodiment of the present disclosure.

**477** Referring to FIG. 36, the printing reservation command is received from the user terminal apparatus 100 at operation S3610. Here, the printing reservation command may include information on the file, reservation time information, and movement path information, and may further include option information. If the file corresponding to the printing reservation command is stored in the user terminal apparatus 100, the file or the printing data for the corresponding file may be received from the user terminal apparatus 100.

**478** It is determined whether or not the reservation time has arrived after receiving the printing reservation command at operation S3620. The above-mentioned reservation time may be a destination arrival time, an output printing time, a movement start time, and the like. Therefore, in the case in which the destination arrival time is set as the reservation time, a time obtained by subtracting the path movement time and the output reservation time from the arrival time may be calculated as the reservation time, and it may be determined whether or not the calculated reservation time has arrived. In the case in which the output printing time is set as the reservation time, a time point obtained by subtracting the movement time from the output reservation time may be calculated as the reservation time, and it may be determined whether or not the calculated reservation time has arrived.

**479** If the reservation time has arrived, the image forming apparatuses which are available on the movement path may be retrieved at operation S3630. If the option information is received, only the image forming apparatus corresponding to the option information among the image forming apparatuses which are available on the movement path may be retrieved. In the case in which cost is set in the option information, the image forming apparatus capable of performing an output at the lowest cost among the retrieved image forming apparatuses may also be selected.

**480** The retrieved image forming apparatus may be notified to the user terminal apparatus at operation S3640. Here, the user terminal apparatus which is notified may be the user terminal apparatus transmitting the printing reservation command, and may also be another user terminal apparatus.

**481** As described above, the reservation printing method in a cloud server according to the present embodiment supports the reservation printing, thereby making it possible to perform the printing task at a time point requested by the user. In addition, the information of the image forming apparatus is provided by considering the movement path of the user, and accordingly, the printing task may be performed, thereby making it possible for the user to easily perform the printing task on the movement path. The reservation printing method in a cloud server as illustrated in FIG. 36 may be executed on the cloud server having the configuration as illustrated in FIG. 7 or 8, and may also be executed on a cloud server having other configurations.

**482** In addition, the reservation printing method in a cloud server as described above may be implemented in a program (or an application) including an executable algorithm which may be executed on a computer, and the above-mentioned program may be stored and provided in a non-transitory computer readable medium.

**483** FIG. 37 is a flowchart illustrating a reservation printing method in a user terminal apparatus according to an embodiment of the present disclosure.

**484** Referring to FIG. 37, the file, which is a target to be printed, is selected by the user, and the reservation printing command for the file is received at operation S3710. In response to this, a Ul for receiving the path and the reservation time may be displayed, and the movement path information and the reservation time information may be received from the user.

**485** In addition, the user terminal apparatus 100 transmits the printing reservation command to the cloud server 300 at operation S3720. In the case in which the file selected by the user is stored in only the user terminal apparatus 100, the selected file or the printing data corresponding to the file may be simultaneously transmitted to the cloud server 300.

486 In response to this, the notification information is received from the cloud server at a reserved time point at operation S3730. For example, the information on the image forming apparatus which is available by the user on the movement path retrieved by the cloud server 300 may be received as the notification information.

487 The user may find the corresponding image forming apparatus based on the notification information, and may request the corresponding image forming apparatus to print the pre-transmitted file or the printing data. Such request may also be transmitted to the cloud server 300. In the case in which the information on the plurality of image forming apparatuses is included in the notification information, the information on the image forming apparatus to perform the printing task may be transmitted to the cloud server 300.

488 As described above, the reservation printing method in a user terminal apparatus according to the present embodiment supports the reservation printing and the printing task may be performed at a time point requested by the user, thereby making it possible to improve convenience of the user. In addition, the information of the image forming apparatus is provided by considering the movement path of the user, and accordingly, the printing task may be performed, thereby making it possible for the user to easily perform the printing task on the movement path. The reservation printing method in a user terminal apparatus as illustrated in FIG. 37 may be executed on the user terminal apparatus having the configuration as illustrated in FIG. 3 or 4, and may also be executed on a user terminal apparatus having other configurations.

489 In addition, the reservation printing method in a user terminal apparatus as described above may be implemented in a program (or an application) including an executable algorithm which may be executed on a computer, and the above-mentioned program may be stored and provided in a non-transitory computer readable medium. For example, the above-mentioned program may be implemented as an application and may be stored in a server such as an app store. The user of an electronic device may download the application stored in the server and may install the application in the electronic device.

**490** FIG. 38 is a flowchart of a method for managing a document in a user terminal apparatus according to an embodiment of the present disclosure.

491 Referring to FIG. 38, the log-in information is received from the user at operation S3810. Such log-in information is prestored, and in the case in which a specific application is performed, it may be determined that the log-in information is received.

492 In addition, the file list (or alignment information) is requested to the cloud server 300 at operation S3820. This request may be replaced with the transmission of the log-in information.

493 In response to the above-mentioned request, the file list including the usage history is received from the cloud server 300 at operation S3830. Since such file list is aligned based on the usage history, it may be referred to as an alignment result.

494 In addition, the received file list is displayed at operation S3840. For example, the files may be aligned and displayed in a time sequence based on the usage history for each of the plurality of files, and the plurality of usage histories for the files may be displayed with a sub-item for at least one file.

495 As described above, the method for managing a document in a user terminal apparatus according to the present embodiment may retrieve the document with a behavior of the user related to the corresponding file as well as the title, the storing place, and the keyword which are directly related to the file, thereby making it possible to improve convenience of the user. The method for managing a document in a user terminal apparatus as illustrated in FIG. 38 may be executed on the user terminal apparatus having the configuration as illustrated in FIG. 3 or 4, and may also be executed on a user terminal apparatus having other configurations.

496 In addition, the method for managing a document in a user terminal apparatus as described above may be implemented in a program (or an application) including an executable algorithm which may be executed on a computer, and the above-mentioned program may be stored and provided in a non-transitory computer readable medium. For example, the above-mentioned program may be implemented as an application and may be stored in a server such as an app store. The user of an electronic device may download the application stored in the server and may install the application in the electronic device.

**497** FIG. 39 is a flowchart of a method for merging documents in a user terminal apparatus according to an embodiment of the present disclosure.

498 Referring to FIG. 39, first, an edition document file may be displayed at operation S3910. The user selects the file to perform an edition and drives an application program corresponding to the corresponding document file, thereby making it possible to display the selected document file with a Ul provided by the corresponding application program.

499 In addition, if a plug-in for synchronization with another user terminal apparatus is executed, a communication link with another user terminal apparatus is formed at operation S3920. Thereby, if a screen imaging is performed by another user terminal apparatus (not shown), imaged contents are transmitted together with the synchronization command through the formed communication link.

500 Thereby, if the contents are received at operation S3930, the received contents may be merged to a preset position within the document file which is currently being displayed at operation S3940. In the case in which the received contents are image contents including a mathematical expression, an OCR for the received image contents may be performed to generate the mathematical expression, and the generated mathematical expression may be merged to the preset position within the document file which is currently being displayed. Here, the preset position may be a region in which a mouse courser is positioned, or a region in which the user performs a text or an edition.

501 In addition, the method for merging a document in a user terminal apparatus according to the present embodiment may easily merge a plurality of contents according to an intention of the user through synchronization between the user terminal apparatuses, thereby making it possible to also improve convenience of the user. The method for merging a document in a user terminal apparatus as illustrated in FIG. 39 may be executed on the user terminal apparatus having the configuration as illustrated in FIG. 3 or 4, and may also be executed on a user terminal apparatus having other configurations.

**502** In addition, the method for merging a document in a user terminal apparatus as described above may be implemented in a program (or an application) including an executable algorithm which may be executed on a computer, and the above-mentioned program may be stored and provided in a non-transitory computer readable medium. For example, the above-mentioned program may be implemented as an application and may be stored in a server such as an app store. The user of an electronic device may download the application stored in the server and may install the application in the electronic device.

**503** FIG. 40 is a flowchart illustrating a method for forming an image in an image forming apparatus according to an embodiment of the present disclosure.

**504** Referring to FIG. 40, first, the printing data is received at operation S4010. For example, the printing data is received from the user terminal apparatus 100 or the cloud server 300.

505 After receiving the printing data, a Ul for receiving user certification information on the image forming apparatus 200, and receiving the printing command or the edition command for the pre-received printing data may be displayed. In that case, an edition command may be input at operation S4020.

506 If the printing command is input to the above-mentioned Ul, a print for the pre-received printing data may be performed.

507 If the edition command is input to the above-mentioned Ul at operation S4020, examples of a plurality of applicable layouts may be displayed, and one among these layouts may be selected. Here, the examples of the layouts may include a letterspacing change, specific phrase identification, text only, image only, and the like. The letterspacing change is an example of a layout changing a letterspacing of the text in the printing data, the specific phrase identification is an example of a layout discriminately displaying a specific phrase in the printing data, the text only is an example of a layout printing only the text in the printing data, and the image only is an example of a layout printing only the image in the printing data.

**508** The received printing data may be edited depending on the selected layout at operation S4030. For example, if the layout selected by the user is the letterspacing change layout, the printing data may be modified so that an interval of the letterspacing within each of the pages configuring the printing data may be expanded or shortened, and the modified printing data may be printed.

**19** If the user selects the layout that discriminately displays the specific phrase, the specific phrase may be retrieved within the printing data, and a preset image processing may be performed for the corresponding phrase to allow for the phrase to be printed.

**20** In addition, if the user selects the layout in which only the text is printed, only the text within the printing data may be extracted, and the printing data may be reconfigured with only the extracted text to perform the print. Alternatively, the print may be performed by maintaining the layout of the previously received printing data, but preventing only an image object and a graphic object from being printed.

**21** In addition, if the user selects the layout in which only the image is printed, only the image object within the printing data may be extracted and the printing data may be generated with only the extracted image object to perform the print.

**22** In addition, the printing task may be performed using the edited printing data at operation S4040.

23 As described above, the method for forming an image according to the present embodiment may edit the printing data by selecting only any one of various layouts, thereby making it possible to improve convenience of the user. The method for forming an image as illustrated in FIG. 40 may be executed on the image forming apparatus having the configuration as illustrated in FIG. 6 and may also be executed on an image forming apparatus having other configurations.

**24** In addition, the method for forming an image as described above may be implemented in a program (or an application) including an executable algorithm which may be executed on a computer, and the above-mentioned program may be stored and provided in a non-transitory computer readable medium.

The invention is defined by the appended claims.

## Claims

1. A cloud server (300) comprising:
a memory (320) configured to store usage histories for a plurality of files for each user of a plurality of users, wherein a usage history represents one specific function performed by a user on a file;
a transceiver (310) configured to receive a request for a file list from a user terminal apparatus (100); and
a processor (330) configured to:
retrieve a file,
generate an aligned file list for the retrieved file based on a usage history from the usage histories corresponding to the retrieved file,
control the transceiver so that the generated aligned file list is transmitted to the user terminal apparatus;
wherein, when at least one of the retrieved files has a plurality of usage histories, the processor is further configured to generate a file list including the plurality of usage histories; and
to align the files in a time sequence based on the usage history for each of the plurality of files; and
generate a file list having a plurality of histories for the file as a sub-item for at least one file; and
wherein the transceiver is further configured to receive a printing reservation command for at least one of the plurality of files from the user terminal apparatus, which print reservation command is for performing printing at a specific reservation time; and
the processor is further configured to:
determine a user movement path from the current position of the user terminal apparatus and destination information input by a user,
retrieve at least one image forming apparatus which is available on a user movement path among a plurality of image forming apparatuses which are connectable to the cloud server based on the reservation time, and
control the transceiver so that information on the retrieved image forming apparatus is notified to the user terminal apparatus at a time point corresponding to the reservation time.

2. The cloud (300) of claim 1, wherein the usage history comprises a usage history for a file stored in at least one of the cloud server, an image forming apparatus (200), the user terminal apparatus (100), and a file server.

3. The cloud server (300) of claim 1, wherein the usage history comprises at least one of an uploading to the cloud server, an uploading to a file server, a print in an image forming apparatus (100), a scan in the image forming apparatus (200), a facsimile transmission and reception in the image forming apparatus, and a transmission to another user terminal apparatus.

4. The cloud server (300) of claim 1, wherein the retrieved file is stored in a plurality of repositories, and the processor (330) is further configured to generate a plurality of file lists of each of the repositories of the retrieved file.

5. The cloud server (300) of claim 1, wherein the printing reservation command includes option information, and
the processor (330) is further configured to retrieve at least one image forming apparatus (100) which is available on the user path among the plurality of image forming apparatuses by further considering the option information.

6. The cloud server (300) of claim 1, wherein the transceiver (310) is further configured to transmit a file corresponding to the printing reservation command to the at least one retrieved image forming apparatus (100).

7. The cloud server (300) of claim 6, wherein the processor (330) is further configured to:
convert the file corresponding to the printing reservation command into printing data which is processible by the at least one retrieved image forming apparatus (100), and
control the transceiver so that the converted printing data is transmitted to the at least one retrieved image forming apparatus.

8. The cloud server (300) of claim 1, wherein the transceiver (310) is further configured to receive a selection command and selecting a plurality of files and template information providing layout information for at least two or more files of the plurality of files from the user terminal apparatus (100), and
the processor (330) is further configured to:
control the transceiver so that the files corresponding to the selection information are merged with a layout corresponding to the template information to generate a preview image and the preview image is provided to the user terminal apparatus, and
control the transceiver so that when a printing command for the generated preview image is received, printing data corresponding to the preview image is generated and the printing data is transmitted to an image forming apparatus.

9. The cloud server (330) of claim 8, wherein the transceiver (310) is further configured to receive a layout modification command after providing the preview image, and
the processor (330) is further configured to:
modify the generated preview image in response to the received modification command, and
control the transceiver so that the modified preview image is transmitted to the user terminal apparatus (100).

10. A method for managing a document in a cloud server (300), the method comprising:
storing usage histories for a plurality of files for each user of a plurality of users, wherein a usage history represents one specific function performed by a user on a file;
receiving a request for a file list from a user terminal apparatus (100);
retrieving a file;
generating an aligned file list for the retrieved file based on a usage history from the usage histories corresponding to the retrieved file; and
wherein, when at least one of the retrieved files has a plurality of usage histories, generating a file list including the plurality of usage histories;
align the files in a time sequence based on the usage history for each of the plurality of files; and
generate a file list having a plurality of histories for the file as a sub-item for at least one file;
and
transmitting the generated file list to the user terminal apparatus;
receiving a printing reservation command for at least one of the plurality of files from the user terminal apparatus, and
retrieving at least one image forming apparatus which is available on a user path corresponding to path information among a plurality of image forming apparatuses which are connectable to the cloud server based on reservation time information and the path information included in the printing reservation command, and
controlling the transceiver so that information on the retrieved image forming apparatus is notified to the user terminal apparatus at a time point corresponding to the reservation time.

11. The method of claim 10, wherein, in the generating of the file list, when at least one of the retrieved files has a plurality of usage histories, a file list including the plurality of usage histories is generated.

## Patentansprüche

1. Cloudserver (300), umfassend:
einen Speicher (320), der dazu ausgebildet ist, Benutzungshistorien für eine Mehrzahl von Dateien für jeden Benutzer aus einer Mehrzahl von Benutzern zu speichern, wobei eine Benutzungshistorie eine spezifische, durch einen Benutzer an einer Datei ausgeführte Funktion darstellt;
einen Transceiver (310), der dazu ausgebildet ist, eine Anforderung für eine Dateiliste von einem Benutzerendgerät (100) zu empfangen; und
einen Prozessor (330), der dazu ausgebildet ist:
eine Datei abzurufen,
eine angeglichene Dateiliste für die abgerufene Datei auf Basis einer Benutzungshistorie aus den der abgerufenen Datei entsprechenden Benutzungshistorien zu erzeugen, den Transceiver derart zu steuern, dass die erzeugte angeglichene Dateiliste zu dem Benutzerendgerät übertragen wird;
wobei, wenn mindestens eine der abgerufenen Dateien eine Mehrzahl von Benutzungshistorien aufweist, der Prozessor weiterhin dazu ausgebildet ist, eine die Mehrzahl von Benutzungshistorien enthaltende Dateiliste zu erzeugen; und
die Dateien in einer Zeitabfolge auf Basis der Benutzungshistorie für jede der Mehrzahl von Dateien anzugleichen; und
eine Dateiliste mit einer Mehrzahl von Historien für die Datei als Teilelement für mindestens eine Datei zu erzeugen; und
wobei der Transceiver weiterhin dazu ausgebildet ist, einen Druckreservierungsbefehl für mindestens eine aus der Mehrzahl von Dateien von dem Benutzerendgerät zu empfangen, wobei der Druckreservierungsbefehl dazu dient, einen Druckvorgang zu einer spezifischen Reservierungszeit auszuführen; und
wobei der Prozessor weiterhin dazu ausgebildet ist:
einen Bewegungspfad eines Benutzers aus der gegenwärtigen Position des Benutzerendgeräts und den von einem Benutzer eingegebenen Zielinformationen zu bestimmen,
mindestens eine Bilderzeugungsvorrichtung, die an einem Bewegungspfad eines Benutzers unter einer Mehrzahl von Bilderzeugungsvorrichtungen verfügbar ist, die mit dem Cloudserver verbunden werden können, auf Basis der Reservierungszeit abzufragen und
den Transceiver derart zu steuern, dass Informationen über die abgefragte Bilderzeugungsvorrichtung dem Benutzerendgerät zu einem der Reservierungszeit entsprechenden Zeitpunkt mitgeteilt werden.

2. Cloud (300) nach Anspruch 1, wobei die Benutzungshistorie eine Benutzungshistorie für eine in dem Cloudserver, einer Bilderzeugungsvorrichtung (200), dem Benutzerendgerät (100) und/oder einem Dateiserver gespeicherte Datei umfasst.

3. Cloudserver (300) nach Anspruch 1, wobei die Benutzungshistorie einen Hochladevorgang auf den Cloudserver, einen Hochladevorgang auf einen Dateiserver, einen Druckvorgang in einer Bilderzeugungsvorrichtung (100), einen Scanvorgang in der Bilderzeugungsvorrichtung (200), einen Facsimile-Sende- und -Empfangsvorgang in der Bilderzeugungsvorrichtung und/oder einen Übertragungsvorgang zu einem anderen Benutzerendgerät umfasst.

4. Cloudserver (300) nach Anspruch 1, wobei die abgerufene Datei in einer Mehrzahl von Repositorien gespeichert ist, und der Prozessor (330) weiterhin dazu ausgebildet ist, eine Mehrzahl von Dateilisten von jedem der Repositorien der abgerufenen Datei zu erzeugen.

5. Cloudserver (300) nach Anspruch 1, wobei der Druckreservierungsbefehl Optionsinformationen umfasst, und
der Prozessor (330) weiterhin dazu ausgebildet ist, mindestens eine Bilderzeugungsvorrichtung (100), die an dem Benutzerpfad unter der Mehrzahl von Bilderzeugungsvorrichtungen verfügbar ist, durch weiteres Berücksichtigen der Optionsinformationen abzufragen.

6. Cloudserver (300) nach Anspruch 1, wobei der Transceiver (310) weiterhin dazu ausgebildet ist, eine dem Druckreservierungsbefehl entsprechende Datei zu der mindestens einen abgefragten Bilderzeugungsvorrichtung (100) zu übertragen.

7. Cloudserver (300) nach Anspruch 6, wobei der Prozessor (330) weiterhin dazu ausgebildet ist:
die dem Druckreservierungsbefehl entsprechende Datei in Druckdaten umzuwandeln,
die von der mindestens einen abgefragten Bilderzeugungsvorrichtung (100) verarbeitet werden können, und
den Transceiver derart zu steuern, dass die umgewandelten Druckdaten zu der mindestens einen abgefragten Bilderzeugungsvorrichtung übertragen werden.

8. Cloudserver (300) nach Anspruch 1, wobei der Transceiver (310) weiterhin dazu ausgebildet ist, einen Auswahlbefehl zu empfangen und eine Mehrzahl von Dateien und Template-Informationen auszuwählen, die Layout-Informationen für mindestens zwei oder mehr Dateien der Mehrzahl von Dateien von dem Benutzerendgerät (100) liefern, und
der Prozessor (330) weiterhin dazu ausgebildet ist:
den Transceiver derart zu steuern, dass die den Auswahl-Informationen entsprechenden Dateien mit einem den Template-Informationen entsprechenden Layout zusammengeführt werden, um ein Vorschaubild zu erzeugen, und das Vorschaubild dem Benutzerendgerät bereitgestellt wird, und
den Transceiver derart zu steuern, dass, wenn ein Druckbefehl für das erzeugte Vorschaubild empfangen wird, dem Vorschaubild entsprechende Druckdaten erzeugt werden, und die Druckdaten zu einer Bilderzeugungsvorrichtung übertragen werden.

9. Cloudserver (330) nach Anspruch 8, wobei der Transceiver (310) weiterhin dazu ausgebildet ist, nach Bereitstellen des Vorschaubilds einen Layoutmodifikationsbefehl zu empfangen, und der Prozessor (330) weiterhin dazu ausgebildet ist:
das erzeugte Vorschaubild als Reaktion auf den empfangenen Modifikationsbefehl zu modifizieren, und den Transceiver derart zu steuern, dass das modifizierte Vorschaubild zu dem Benutzerendgerät (100) übertragen wird.

10. Verfahren zum Verwalten eines Dokuments in einem Cloudserver (300), wobei das Verfahren Folgendes umfasst:
Speichern von Benutzungshistorien für eine Mehrzahl von Dateien für jeden Benutzer aus einer Mehrzahl von Benutzern, wobei eine Benutzungshistorie eine spezifische, von einem Benutzer an einer Datei ausgeführte Funktion darstellt;
Empfangen einer Anforderung für eine Dateiliste von einem Benutzerendgerät (100);
Abrufen einer Datei;
Erzeugen einer angeglichenen Dateiliste für die abgerufene Datei auf Basis einer Benutzungshistorie aus den der abgerufenen Datei entsprechenden Benutzungshistorien; und
wobei, wenn mindestens eine der abgerufenen Dateien eine Mehrzahl von Benutzungshistorien aufweist, Erzeugen einer die Mehrzahl von Benutzungshistorien umfassenden Dateiliste;
Ausrichten der Dateien in einer Zeitabfolge auf Basis der Benutzungshistorie für jede der Mehrzahl von Dateien; und
Erzeugen einer Dateiliste mit einer Mehrzahl von Historien für die Datei als Teilelement für mindestens eine Datei; und
Übertragen der erzeugten Dateiliste zu dem Benutzerendgerät;
Empfangen eines Druckreservierungsbefehls für mindestens eine aus der Mehrzahl von Dateien von dem Benutzerendgerät, und
Abfragen mindestens einer Bilderzeugungsvorrichtung, die an einem Pfadinformationen entsprechenden Benutzerpfad unter einer Mehrzahl von Bilderzeugungsvorrichtungen verfügbar ist, die mit dem Cloudserver verbunden werden können, auf Basis von Reservierungszeitinformationen und den in dem Druckreservierungsbefehl enthaltenen Pfadinformationen, und
Steuern des Transceivers derart, dass Informationen über die abgefragte Bilderzeugungsvorrichtung dem Benutzerendgerät zu einem der Reservierungszeit entsprechenden Zeitpunkt mitgeteilt werden.

11. Verfahren nach Anspruch 10, wobei beim Erzeugen der Dateiliste, wenn mindestens eine der abgerufenen Dateien eine Mehrzahl von Benutzungshistorien aufweist, eine die Mehrzahl von Benutzungshistorien enthaltende Dateiliste erzeugt wird.

## Revendications

1. Serveur en nuage (300) comprenant :
une mémoire (320) configurée pour stocker des historiques d'utilisation pour une pluralité de fichiers pour chaque utilisateur d'une pluralité d'utilisateurs, un historique d'utilisation représentant une fonction spécifique effectuée par un utilisateur sur un fichier ;
un émetteur-récepteur (310) configuré pour recevoir une demande d'une liste de fichiers d'un appareil terminal d'utilisateur (100) ; et
un processeur (330) configuré pour :
extraire un fichier,
générer une liste de fichiers alignés pour le fichier extrait sur la base d'un historique d'utilisation à partir des historiques d'utilisation correspondant au fichier extrait,
commander l'émetteur-récepteur de sorte que la liste de fichiers alignés générée est transmise à l'appareil terminal d'utilisateur ;
lorsqu'au moins l'un des fichiers extraits a une pluralité d'historiques d'utilisation, le processeur étant en outre configuré pour générer une liste de fichiers comprenant la pluralité d'historiques d'utilisation ; et
aligner les fichiers dans une séquence temporelle sur la base de l'historique d'utilisation pour chacun de la pluralité de fichiers ; et
générer une liste de fichiers ayant une pluralité d'historiques pour le fichier en tant que sous-élément pour au moins un fichier ; et
l'émetteur-récepteur étant en outre configuré pour recevoir une commande de réservation d'impression pour au moins l'un de la pluralité de fichiers à partir de l'appareil terminal d'utilisateur, laquelle commande de réservation d'impression est destinée à effectuer une impression à un temps de réservation spécifique ; et
le processeur est en outre configuré pour :
déterminer un trajet de mouvement d'utilisateur à partir de la position actuelle de l'appareil terminal d'utilisateur et d'informations de destination entrées par un utilisateur,
extraire au moins un appareil de formation d'image qui est disponible sur un trajet de mouvement d'utilisateur parmi une pluralité d'appareils de formation d'image pouvant être connectés au serveur en nuage sur la base du temps de réservation,
commander l'émetteur-récepteur de sorte que des informations sur l'appareil de formation d'image extrait sont notifiées à l'appareil terminal d'utilisateur à un instant correspondant au temps de réservation.

2. Nuage (300) selon la revendication 1, dans lequel l'historique d'utilisation comprend un historique d'utilisation pour un fichier stocké dans au moins l'un du serveur en nuage, d'un appareil de formation d'image (200), de l'appareil terminal d'utilisateur (100) et d'un serveur de fichiers.

3. Serveur en nuage (300) selon la revendication 1, dans lequel l'historique d'utilisation comprend au moins l'un d'un téléchargement sur le serveur en nuage, d'un téléchargement sur un serveur de fichiers, d'une impression dans un appareil de formation d'image (100), d'une numérisation dans l'appareil de formation d'image (200), d'une transmission et d'une réception par télécopieur dans l'appareil de formation d'image, et d'une transmission vers un autre appareil terminal d'utilisateur.

4. Serveur en nuage (300) selon la revendication 1, dans lequel le fichier extrait est stocké dans une pluralité de référentiels, et le processeur (330) est en outre configuré pour générer une pluralité de listes de fichiers de chacun des référentiels du fichier extrait.

5. Serveur en nuage (300) selon la revendication 1, dans lequel la commande de réservation d'impression inclut des informations d'option, et
le processeur (330) est en outre configuré pour extraire au moins un appareil de formation d'image (100) qui est disponible sur le trajet d'utilisateur parmi la pluralité d'appareils de formation d'image en prenant en compte en outre les informations d'option.

6. Serveur en nuage (300) selon la revendication 1, dans lequel l'émetteur-récepteur (310) est en outre configuré pour transmettre un fichier correspondant à la commande de réservation d'impression à l'au moins un appareil de formation d'image extrait (100).

7. Serveur en nuage (300) selon la revendication 6, dans lequel le processeur (330) est en outre configuré pour :
convertir le fichier correspondant à la commande de réservation d'impression en données d'impression pouvant être traitées par l'au moins un appareil de formation d'image extrait (100), et
commander l'émetteur-récepteur de sorte que les données d'impression converties sont transmises à l'au moins un appareil de formation d'image extrait.

8. Serveur en nuage (300) selon la revendication 1, dans lequel l'émetteur-récepteur (310) est en outre configuré pour recevoir une commande de sélection et sélectionner une pluralité de fichiers et des informations de modèle fournissant des informations d'agencement pour au moins deux fichiers ou plus de la pluralité de fichiers à partir de l'appareil terminal d'utilisateur (100), et
le processeur (330) est en outre configuré pour :
commander l'émetteur-récepteur de sorte que les fichiers correspondant aux informations de sélection sont fusionnés avec un agencement correspondant aux informations de modèle afin de générer une image de prévisualisation et l'image de prévisualisation est fournie à l'appareil terminal d'utilisateur, et
commander l'émetteur-récepteur de sorte que lorsqu'une commande d'impression pour l'image de prévisualisation générée est reçue, des données d'impression correspondant à l'image de prévisualisation sont générées et les données d'impression sont transmises à un appareil de formation d'image.

9. Serveur en nuage (330) selon la revendication 8, dans lequel l'émetteur-récepteur (310) est en outre configuré pour recevoir une commande de modification d'agencement après la fourniture de l'image de prévisualisation, et le processeur (330) est en outre configuré pour :
modifier l'image de prévisualisation générée en réponse à la commande de modification reçue, et
commander l'émetteur-récepteur de sorte que l'image de prévisualisation modifiée est transmise à l'appareil terminal d'utilisateur (100).

10. Procédé de gestion d'un document dans un serveur en nuage (300), le procédé comprenant :
le stockage d'historiques d'utilisation pour une pluralité de fichiers pour chaque utilisateur d'une pluralité d'utilisateurs, un historique d'utilisation représentant une fonction spécifique effectuée par un utilisateur sur un fichier ;
la réception d'une demande d'une liste de fichiers d'un appareil terminal d'utilisateur (100) ; et
l'extraction d'un fichier ;
la génération d'une liste de fichiers alignés pour le fichier extrait sur la base d'un historique d'utilisation à partir des historiques d'utilisation correspondant au fichier extrait ; et
lorsqu'au moins l'un des fichiers extraits a une pluralité d'historiques d'utilisation, la génération d'une liste de fichiers incluant la pluralité d'historiques d'utilisation ;
l'alignement des fichiers dans une séquence temporelle sur la base de l'historique d'utilisation pour chacun de la pluralité de fichiers ; et
la génération d'une liste de fichiers ayant une pluralité d'historiques pour le fichier en tant que sous-élément pour au moins un fichier ; et
la transmission de la liste de fichiers générée à l'appareil terminal d'utilisateur ;
la réception d'une commande de réservation d'impression pour au moins l'un de la pluralité de fichiers à partir de l'appareil terminal d'utilisateur, et
l'extraction d'au moins un appareil de formation d'image qui est disponible sur un trajet d'utilisateur correspondant à des informations de trajet parmi une pluralité d'appareils de formation d'image pouvant être connectés au serveur en nuage sur la base des informations de temps de réservation et des informations de trajet incluses dans la commande de réservation d'impression, et
la commande de l'émetteur-récepteur de sorte que les informations sur l'appareil de formation d'image extrait sont notifiées à l'appareil terminal d'utilisateur à un instant correspondant au temps de réservation.

11. Procédé selon la revendication 10, dans lequel, lors de la génération de la liste de fichiers, lorsqu'au moins l'un des fichiers extraits a une pluralité d'historiques d'utilisation, une liste de fichiers incluant la pluralité d'historiques d'utilisation est générée.
